# EUROPEAN PATENT APPLICATION

(11) **EP 2 098 987 A1**
(43) Date of publication of application: **09.09.2009**
(21) Application number: 07791729.2
(22) Date of filing: 01.08.2007
(51) Int. Cl.: G06Q 50/00, G05B 19/418

(54) **PRODUCTION SYSTEM CREATING SYSTEM, PRODUCTION SYSTEM CREATING METHOD, AND STORAGE MEDIUM STORING PRODUCTION SYSTEM CREATING PROGRAM FOR ALLOWING COMPUTER TO EXECUTE PRODUCTION SYSTEM CREATING METHOD**

(30) Priority: 10.08.2006 JP 2006217941
(71) Applicant: Class Technology Co., Ltd., Shibuya-ku, Tokyo 151-0053 (JP)
(72) Inventor: YOTSUKURA, Mikio, Tokyo 151-0053 (JP); YOKOYAMA, Hiroshi, Tokyo 151-0053 (JP)
(74) Representative: Townsend, Stephen
(86) International application number: PCT/JP2007/065045
(87) International publication number: WO 2008/018334

(57) **Abstract**

To provide a production system creating system that can freely combine a plurality of production factors of various types from a superordinate concept toward a subordinate concept thereof to thereby create a production system of a finished product. In a production system creating system 10, a plurality of three-term relationships of various types required for creation of the production system are extracted from a relational database and also a plurality of production factors of various types corresponding to the first to third production factors for forming the extracted three-term relationship is extracted from a factor-type database 17, these three-term relationship extracted from the relational database 18 are integrated, and these production factors extracted from the factor-type database 17 are connected in series from a superordinate concept toward a subordinate concept thereof according to the integrated three-term relationship to thereby create the production system corresponding to a finished product.

## Description

### TECHNICAL FIELD

The present invention relates to a production system creating system for creating a production system of various articles from a combination of production factors branching from a superordinate concept toward a subordinate concept; and further relates to a production system creating method for creating the production system of the various articles from the combination of the production factors, and a computer readable storage medium that stores a production system creating program for causing a computer to execute the production system creating method.

### BACKGROUND ART

There is disclosed a production management system that creates a component parts list of a mechanical apparatus by expanding a plurality of parts of various types constituting the mechanical apparatus into a tree structure (refer to Patent Document 1). This system sets a data number of the mechanical apparatus to 000; sets first part numbers of first part lying just below it to 100, 200, 300, and so on; sets second part numbers of second parts lying just below the first part number 100 to 110, 120, 130, and so on; and sets third part numbers of third parts lying just below the second part number 110 to 111, 112, 113, and so on. It is to be noted that the second part numbers lying below the first part number 200 are 210, 220, 230, and so on, and the second part numbers lying below the first part number 300 are 310, 320, 330, and so on. In addition, the third part numbers lying below the second part number 210 are 211, 212, and 213, and the third part numbers lying below the second part number 310 are 311, 312, and 313. In this system, the first part numbers are connected to the data number of the mechanical apparatus, the second part numbers are connected to the first part number, and the third part numbers are connected to the second part number, thereby a plurality of parts that form the mechanical apparatus can be expanded as the tree structure.
Patent Document 1: Japanese Unexamined Patent Publication (Kokai) No. 2004-62526

### DISCLOSURE OF THE INVENTION

### PROBLEM TO BE SOLVED BY THE INVENTION

In the production management system disclosed in the aforementioned patent publication, the component parts of the mechanical apparatus are managed based on the component numbers, and the first to third parts specified by the component numbers are arranged in the order of the numbers, so that the specific second part will lie just below the first part and the specific third part will lie just below the second part. Hence, the first to third parts arranged in a tree structure are uniquely defined in this system, and neither a different type of part can be arranged below the first part and a different type of part can be arranged below the second part, nor production factors other than the parts can be incorporated therein, so that it is difficult to create a constitution table in which production factors of different types are freely combined with each other.

An object of the present invention is to provide a production management system and a production management method that can freely combine a plurality of production factors of different types from a superordinate concept toward a subordinate concept thereof to thereby create production systems of various articles.

### MEANS FOR SOLVING THE PROBLEM

The premise of the present invention for solving the aforementioned problems is a production system creating system for creating a production system of an article from a combination of production factors branching from a superordinate concept toward a subordinate concept.

The present invention in the premise is **characterized in that** the production factors are linked with each other by an upper/lower two-term relationship between an arbitrary first production factor and a second production factor lying just below it and also linked with each other by an upper/lower three-term relationship among the first and second production factors, and a third production factor lying just below the second production factor, and the production system creating system is provided with a factor-type database for storing a plurality of production factors of different types, and a relational database for storing a plurality of two-term relationships of different types and a plurality of three-term relationship of different types, and uses these production factors to execute production system creating means for creating production systems corresponding to various articles, wherein in the production system creating means, a plurality of three-term relationships of various types required for creation of the production system are extracted from the relational database and also a plurality of production factors of various types corresponding to the first to third production factors for forming the extracted three-term relationship are extracted from the factor-type database, the three-term relationships extracted from the relational database are integrated, and the production factors extracted from the factor-type database are connected in series from a superordinate concept toward a subordinate concept thereof according to the three-term relationship thus integrated to thereby create production systems corresponding to various articles.

As one example of the aforementioned production system creating system, in the production system creating system, the factor-type database is classified into first to n-th factor-type databases, first to n-th factor-type numbers for specifying a type of the production factor are individually set to these production factors, these production factors are stored in the first to n-th factor-type databases based on the first to n-th factor-type numbers, and the factor-type numbers of the first and second production factors for forming the two-term relationship and the factor-type number of the first to third production factors for forming the three-term relationship are stored in the relational database, wherein in the production system creating means, a plurality of production factors of various types corresponding to the first to third production factors for forming these extracted three-term relationships are extracted from the first to n-th factor-type databases based on the first to n-th factor-type numbers, and while referring to the first to n-th factor-type numbers of the first to third production factors of the three-term relationship extracted from the relational database, a plurality of the three-term relationships of various types thus extracted are integrated by combining the production factors of the same factor-type number with each other among the production factors for forming these three-term relationships.

As another example of the aforementioned production system creating system, in the production system creating system, first to n-th departmental numbers for sorting the production factors by department are individually set to these production factors, departmental production system outputting means for outputting a departmental production system formed only of required production factors among the production systems created by the production system creating means is executed for every department, wherein in the departmental production system outputting means, the departmental numbers of a plurality of production factors of various types corresponding to the first to third production factors for forming these three-term relationship extracted from the relational database are referred to, and the production system formed only of production factors corresponding to the same departmental number is outputted.

As another example of the aforementioned production system creating system, in the production system creating system, each of the production factors stored in the factor-type database can be altered and at least any one of the first to third production factors stored in the relational database can be altered, and wherein in the production system creating means, when each of the production factors stored in the factor-type databases and the first to third production factors stored in the relational database are altered, altered new production factors are used and new three-term relationships formed of the altered first to third production factors are used to thereby integrate the three-term relationships again, and production systems corresponding to the various articles are re-created according to the integrated three-term relationship.

The second premise of the present invention for solving the aforementioned problems is a production management creating method that includes a factor-type database for storing a plurality of production factors of various types, and a relational database for storing a plurality of the two-term relationships of various types between the production factors linked by an upper/lower two-term relationship between an arbitrary first production factor and a second production factor lying just below it, and for storing a plurality of the three-term relationships of various types among the production factors linked by an the upper/lower three-term relationship among the first and second production factors, and a third production factor lying just below the second production factor, wherein a plurality of three-term relationships of various types required for creation of the production system are extracted from a relational database and also a plurality of production factors of various types corresponding to the first to third production factors for forming the extracted three-term relationship are extracted from the factor-type database, the three-term relationships extracted from the relational database are integrated, these production factors extracted from the factor-type database are connected in series from a superordinate concept toward a subordinate concept thereof according to the integrated three-term relationship to thereby create production systems of the various articles, and the created production systems are stored and outputted.

As one example of the aforementioned production system creating method, the factor-type database is classified into first to n-th factor-type databases, first to n-th factor-type numbers for specifying a type of the production factor are individually set to these production factors, these production factors are stored in the first to n-th factor-type databases based on the first to n-th factor-type numbers, and the factor-type numbers of the first and second production factors for forming the two-term relationship and the factor-type number of the first to third production factors for forming the three-term relationship are stored in the relational database, wherein in this production system creating method, a plurality of production factors of various types corresponding to the first to third production factors for forming these extracted three-term relationships are extracted from the first to n-th factor-type databases based on the first to n-th factor-type numbers, and while referring to the first to n-th factor-type numbers of the first to third production factors of the three-term relationship extracted from the relational database, a plurality of three-term relationships of various types thus extracted are integrated by combining the production factors of the same factor-type number with each other among the production factors for forming these three-term relationships.

As another example of the aforementioned production system creating method, in the production system creating method, first to n-th departmental numbers for sorting the production factors by department are individually set to these production factors, the first to n-th departmental numbers of a plurality of production factors of various types corresponding to the first to third production factors for forming these three-term relationship extracted from the relational database are referred to, and a departmental production system formed only of the production factors corresponding to the same departmental number among the created production systems is outputted.

As another example of the aforementioned production system creating method, in the production system creating method, each of the production factors stored in the factor-type database can be altered and at least any one of the first to third production factors stored in the relational database can be altered, and when each of the production factors stored in the factor-type databases and the first to third production factors stored in the relational database are altered, altered new production factors are used and new three-term relationships formed of the altered first to third production factors are used to thereby integrate the three-term relationships again, and production systems corresponding to the various articles are re-created according to the integrated three-term relationship.

The third premise of the present invention for solving the problems is a computer readable storage medium for storing a production system creating program for causing the computer to execute a production system creating method that extracts a plurality of three-term relationships of various types required for creating the production system from a relational database for storing a plurality of two-term relationships of various types between production factors linked by an upper/lower two-term relationship between an arbitrary first production factor and a second production factor lying just below it and a plurality of the three-term relationships of various types among production factors linked by an the upper/lower three-term relationship among the first and second production factors, and a third production factor lying just below the second production factor, extracts a plurality of production factors of various types corresponding to the first to third production factors for forming the extracted three-term relationships from the factor-type database for storing these production factors, integrates these three-term relationships extracted from the relational database, connects these production factors extracted from the factor-type database in series from a superordinate concept toward a subordinate concept thereof according to the integrated three-term relationship to thereby create production systems corresponding to the various articles, and stores and outputs the created production systems.

### EFFECT OF THE INVENTION

According to the production system creating system and production system creating method in accordance with the present invention, since integrating a plurality of three-term relationships of various types extracted from the relational database and connecting a plurality of production factors of various types extracted from the factor-type database in series from the superordinate concept toward the subordinate concept thereof according to the integrated three-term relationship allow the production systems corresponding to various articles to be created, utilizing the three-term relationship formed of the first to third production factors makes it possible to create various production systems in which the production factors of different types are freely combined. In the production system creating system and the production system creating method, while each of the departments shares the factor-type database and the relational database, the production system that can be shared by each of the departments can be formed and the production system can be managed in an integrated manner by the relational database and the factor-type database, so that each department does not need to form the production system independently, thus making it possible to omit useless time and labor due to each of the departments creating and managing a huge number of different production systems individually.

In the production system creating system and the production system creating method, in which the factor-type numbers of the first to third production factors of the three-term relationship extracted from the relational database are referred to, and a plurality of three-term relationships of various types thus extracted are integrated by combining the production factors of the same factor-type number, it is possible to reliably combine the mutually associated production factors with each other, thus allowing various production systems to be created, in which a plurality of production factors of different types are freely combined by utilizing the three-term relationships. In the production system creating system and the production system creating method, since each of the production factors is classified into the first to n-th factor-type databases based on the first to n-th factor-type numbers set thereto and stored in the factor-type databases, it is possible to group each of the production factors that can be shared by each department for every factor-type according to the first to n-th databases to thereby manage them in an integrated manner, thus making it possible to omit time and labor due to each of the departments managing these production factors individually. In the production system creating system and the production system creating method, it is possible to form the production system that can be shared by each department, from each of the production factors stored in the first to n-th factor-type databases while each department shares the relational database and the first to n-th factor-type databases, thus allowing the production system to be managed in an integrated manner by the relational database and the first to n-th factor-type databases.

In the production system creating system and the production system creating method that output the departmental production system formed only of the required production factors for every department based on the first to n-th departmental numbers individually set to the production factors, since the production system including only the production factors required to be displayed to each department is outputted, the production factor which is not required to be displayed to each department can be omitted from the production system, thus allowing the production system having high utility value and ease-of-use for every department to be provided to the department in real time. In the production system creating system and the production system creating method, each department can utilize the production system formed only of the production factors required for it, thus allowing the working efficiency of each department to be improved. [0018] In the production system creating system and the production system creating method, in which when the production factors stored in the factor-type databases and the first to third production factors stored in the relational database are altered, the altered production factors are used, and new three-term relationships formed of the first to third production factors after the alteration are used to thereby integrate the three-term relationships, and the production system is re-created according to the three-term relationship thus integrated, it is possible to manage the alteration of the production factors in an integrated manner using the factor-type database, and also to manage the alteration of the first to third production factors in an integrated manner by the relational database, thus allowing the new production system that can be shared by each department to be created in real time after the alteration of the production factors and the first to third production factors. In the production system creating system and the production system creating method, it is not necessary to alter the production factor stored in the factor-type database, and the first to third production factors stored in the relational database for every department to create and manage the production system, thus allowing time and labor due to each of the departments individually performing the alteration of the production factors and the alteration of the first to third production factors to be omitted.

In the computer readable storage medium that stores the production system creating program for causing the computer to execute the production system creating method which connects these production factors extracted from the factor-type database in series from a superordinate concept toward a subordinate concept thereof according to the integrated three-term relationship to thereby create production systems corresponding to the various articles, and stores and outputs the created production systems, installing the production system creating program stored therein in each computer as required allows various production systems corresponding to various articles to be created in real time, irrespective of the factor-type of the product.

### BRIEF DESCRIPTION OF THE DRAWINGS

Fig. 1 is a schematic configuration view of a production system creating system shown as one example;
Fig. 2 is a view showing one example of a plurality of production factors of various types stored in a factor-type database;
Fig. 3 is a view showing one example of a two-term relationship and a three-term relationship between and among the production factors stored in a relational database;
Fig. 4 is a view for explaining integration of a plurality of two-term relationships of various types and integration of a plurality of three-term relationships of various types executed by a computer;
Fig. 5 is a view showing one example of a production system outputted by department,
Fig. 6 is a view showing another example of a plurality of production factors of various types stored in the factor-type database;
Fig. 7 is a view showing another example of the two-term relationship and the three-term relationship between and among the production factors stored in the relational database;
Fig. 8 is a view for explaining integration of a plurality of two-term relationships of various types and integration of a plurality of three-term relationships of various types executed by a computer;
Fig. 9 is a view showing another example of the production system outputted by department;
Fig. 10 is a view showing another example of a plurality of production factors of various types stored in the factor-type database;
Fig. 11 is a view showing another example of the two-term relationship and the three-term relationship between and among the production factors stored in the relational database;
Fig. 12 is a view for explaining the integration of a plurality of two-term relationships of various types and the integration of a plurality of three-term relationships of various types executed by a computer; and
Fig. 13 is a view showing another example of the production system outputted by department.

### EXPLANATIONS OF LETTERS OR NUMERALS

- 10:: Production management system
- 11:: Computer

- 12:: Design department
- 13:: Manufacturing department
- 14:: Purchasing department
- 15:: Logistics department
- 16:: Integrated management database
- 17:: Factor-type database
- 18:: Relational database
- 19:: Item database (first factor-type database)
- 20:: Result database (second factor-type database)
- 21:: Process database (third factor-type database)
- 22:: Resource database (fourth factor-type database)
- 23:: Site database (fifth factor-type database)

### DETAILED DESCRIPTION OF THE PREFERRED EMBODIMENTS

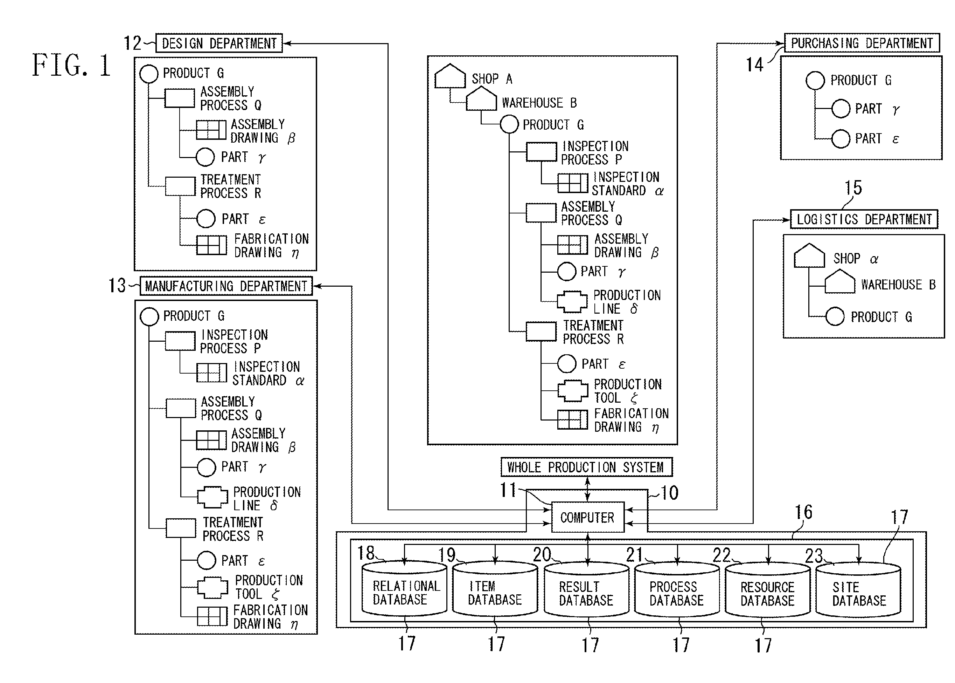

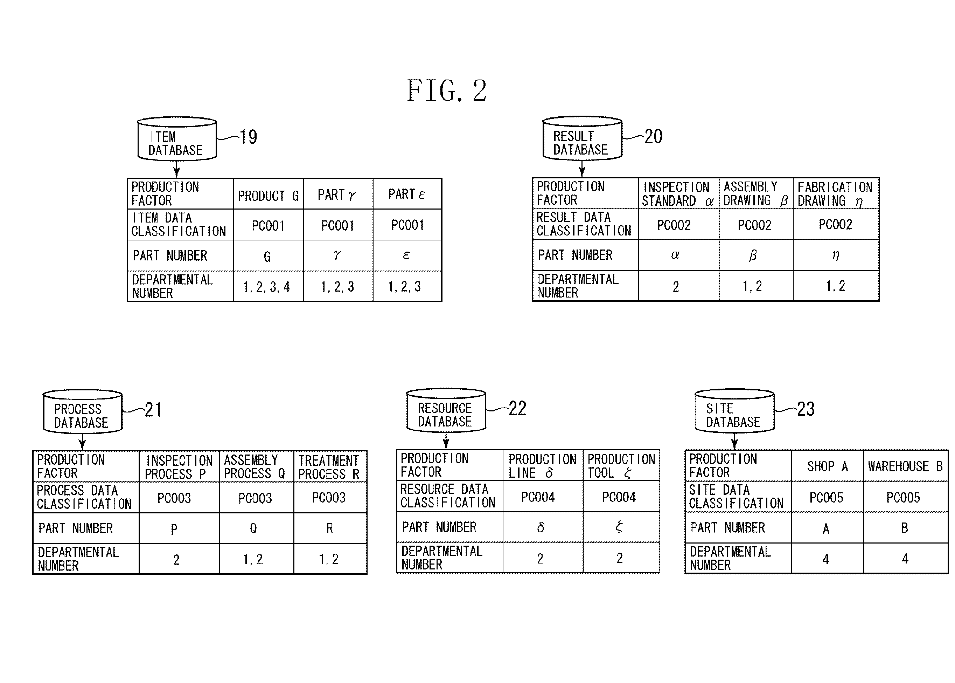

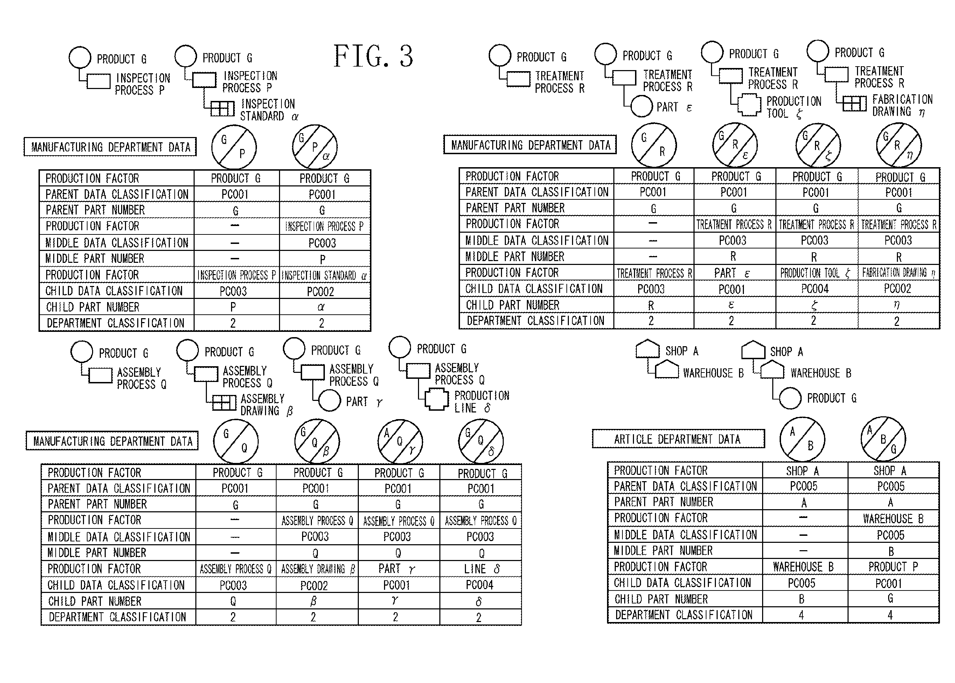

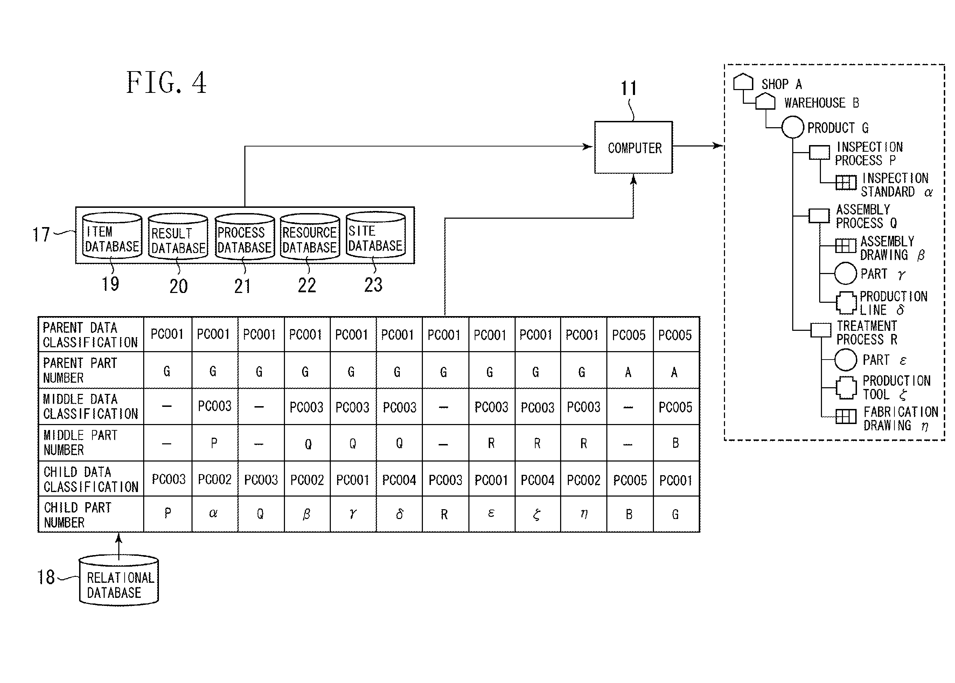

Referring to the appended drawings, details of a production system creating system and a production system creating method in accordance with the present invention will be described as follows. Fig. 1 is a schematic configuration view of a production system creating system 10 shown as one example, while Fig. 2 is a view showing one example of a plurality of production factors of various types stored in a factor-type database 17. Fig. 3 is a view showing one example of a two-term relationship and a three-term relationship between and among the production factors stored in a relational database 18, while Fig. 4 is a view for explaining integration of the two-term relationships and integration of the three-term relationships executed by the computer 11. Fig. 1 illustrates a departmental production system formed only of production factors required for each of departments of a design department 12, a manufacturing department 13, a purchasing department 14, and a logistics department 15 as well as a created whole production system. It is noted that the departments are not limited to those shown in the figure, but all the department classifications given by classifying the organizations of public offices, companies, and the like may be included. The production system creating system 10 is formed of a computer 11, an integrated management database 16 for centrally controlling data, such as the production factors, the two-term relationship and the three-term relationship between and among the production factors, and the like. Although not shown, terminal devices (computers) connected to the computer 11 via interfaces (wire or wireless) are arranged in these departments 12, 13, 14, and 15.

Here, the production factor means each piece of technical information (technical element) essential for manufacturing an article, and shops, warehouses, inspection processes, assembly processes, treatment processes, inspection standards, assembly drawings, fabrication drawings, processing instructions, parts, production lines, production tools, and inspection tools are illustrated as the production factor in this embodiment (refer to Fig. 1 through Fig. 13). However, the production factors shown in the figures represent only one example, and the production factors are not limited thereto shown therein. The production factor includes all the production factors to be technical information of the article. The product and the part belong to an item (factor-type) which is a material factor of an article, and the inspection standard, the assembly drawing, the fabrication drawing, and the processing instruction belong to a result (factor-type) which is a design factor of the article, and the inspection process, the assembly process, and the treatment process belong to a process (factor-type) which is a process factor of the article. The production line, the production tool, and the inspection tool belong to a resource (factor-type) which is a resource factor of the article, and the shop and the warehouse belong to a site (factor-type) which is a location factor. It is noted that not only a finished product but also a semifinished product are included in the article.

A factor-type number (first to n-th factor-type numbers) for specifying a type of the production factor corresponding to each factor-type is individually set to each of the production factors. The first factor-type number is set to each material factor belonging to the item, the second factor-type number is set to each design factor belonging to the result, and the third factor-type number is set to each process factor belonging to the process. The fourth factor-type number is set to each resource factor belonging to the resource, and the fifth factor-type number is set to the site factor belonging to the site. It is to be noted that the factor-type to which the production factor belongs is not limited to the item, the process, the result, the resource, and the site. The factor-type to which the production factor belongs includes all the other factor-types required to manufacture the article, and the sixth to n-th factor-type numbers for specifying it are set to the other factor-types. A departmental number (first to n-th departmental numbers) for sorting these factors by department is individually set to each of the production factors. In this embodiment, a departmental number of the design department 12 is set to No. 1, a departmental number of the manufacturing department 13 is set to No. 2, a departmental number of the purchasing department 14 is set to No. 3, and a departmental number of the logistics department 15 is set to No. 4.

The computer 11 has a central processing unit (CPU or MPU) and a storage unit, and incorporates a high-capacity hard disk therein. Although not shown, input devices such as a keyboard, a mouse, and the like, and output devices such as a display, a printer, and the like are connected to the computer 11 via the interface (wire or wireless). A production system creating program for executing each means of this system is stored in an internal address file of the storage unit. The production system creating program is installed in the storage unit of the computer 11 from an optical disk (storage medium) that stores the program, such as a CD-ROM or the like. It is to be noted that a semiconductor memory and a magnetic disk other than the optical disk may also be used for the storage medium.

When the production system creating program is installed in the computer 11, a model of the factor-type of the item, the result, the process, the resource, the site, and the like, a model of a plurality of production factors of various types belonging to these factor-types, and a model of the factor-type number and the department corresponding to these factor-types, and also the departmental number for indicating each of the departments are stored in the hard disk incorporated in the storage unit of the computer 11 or the computer 11. Further, a database file used as the integrated management database 16 (later-described first to fifth factor-type databases 17 and relational database 18) is created in the hard disk incorporated in the computer 11. The computer 11 extracts required data from the storage unit or the integrated management database 16, and stores data in the storage unit or the integrated management database 16 as required. It is to be noted that a new factor-type, a new production factor, and a new department can be set freely other than the existing factor-type and production factor in this system 10, so that the production system may also be formed using these new production factors. The new factor-type, the new production factor, and the new department are inputted into the computer 11 from the input device, and are stored in the storage unit or the hard disk. In the system 10, the existing factor-type, production factor, and department may be deleted from the storage unit or the hard disk, and the new factor-type, new production factor, and new department, which are newly created may also be deleted from the storage unit or the hard disk.

The central processing unit of the computer 11 activates the production system creating program stored in the internal address file of the storage unit, and executes each means of two-term relationship integrating means for integrating a plurality of two-term relationships of different types; two-term and three-term relationships integrating means for integrating a plurality of two-term relationships of different types and a plurality of three-term relationships of different types; three-term relationship integrating means for integrating a plurality of three-term relationships of different types; production system creating means for creating production systems corresponding to the various articles in real time based on these integrated two-term relationships; production system storing means for storing the created production system in the storage unit or the hard disk; production system outputting means for outputting the created production system via the output device; and departmental production system outputting means for outputting the production system by department, according to the program. It is to be noted that input devices such as a keyboard, a mouse, and the like, and output devices such as a display, a printer, or the like are connected also to a terminal device arranged in each of the departments.

The integrated management database 16 is formed of the factor-type database 17 (first to n-th factor-type databases) for storing each of the production factors, and the relational database 18 for storing the two-term relationship between the production factors and the three-term relationship among the production factors. The integrated management database 16 transfers data to the computer 11 based on a data transfer instruction from the computer 11, and stores data based on a data storage instruction from the computer 11. In addition, data is altered based on a data alteration instruction from the computer 11. The factor-type database 17 is classified into an item database 19 (first factor-type database) corresponding to the first factor-type number; a result database 20 (second factor-type database) corresponding to the second factor-type number; a process database 21 (third factor-type database) corresponding to the third factor-type number; a resource database 22 (fourth factor-type database) corresponding to the fourth factor-type number; and a site database 23 (fifth factor-type database) corresponding to the fifth factor-type number. It is to be noted that the factor-type databases 17 are not limited to those described above, but sixth to n-th factor-type databases for classifying and storing other production factors essential for manufacturing the article for every factor-type may be set in the hard disk.

One example of a procedure for storing in the factor-type database 17 a plurality of production factors of various types, which is technical information of an article (1), will be described as follows. When an item is selected from items displayed on the display, an item input area used as a production factor input area and a departmental area corresponding to the item input area will be displayed on the display. A product (G), a part (γ), and a part (ε), and those part numbers (G), (γ) (ε), (factor-type identification number) are inputted into the item input area via the input device, and department classifications of the product (G), the part (γ), and the part (ε) are inputted into the departmental area. The computer 11 determines that the product (G), the part (γ), and the part (ε) belong to the item with reference to the factor-type, the production factor, and the factor-type number stored in the storage unit or the hard disk, gives an item data classification (PC001) (first factor-type number) to the product (G), the part (γ), and the part (ε), and gives departmental numbers (1, 2, 3, 4) to the product (G), the part (γ), and the part (ε) based on the inputted department classification. The computer 11 stores product data such as the item data classification (PC001) and the departmental numbers (1, 2, 3, 4) of the product (G), a part number (G) for specifying the product (G), and the like in a main file of the item database 19, and also stores part data such as the item data classification (PC001) and departmental numbers (1, 2, 3) of the part (γ) and the part (ε), a part number (γ) for specifying the part (γ), a part number (ε) for specifying the part (ε), and the like, in the main file of the item database 19. Here, the product data includes contents of the product (G) (product name, instruction for use, durable years, amount of money, delivery date, and the like), while the part data includes contents of the part (γ) and the part (ε) (part name, producing district, instruction for use, durable years, amount of money, delivery date, and the like).

When a result is selected from the items displayed on the display, a result input area used as the production factor input area and a departmental area corresponding to the result input area will be displayed on the display. An inspection standard (α), an assembly drawing (β), a fabrication drawing (η), and part numbers (α), (β), and (η) (factor-type identification number) thereof are inputted into the result input area via the input device, and department classifications of the inspection standard (α), the assembly drawing (β), and the fabrication drawing (η) are inputted into the departmental area. The computer 11 determines that the inspection standard (α), the assembly drawing (β), and the fabrication drawing (η) belong to the result with reference to the factor-type, the production factor, and the factor-type number stored in the storage unit or the hard disk, gives a result data classification (PC002) (second factor-type number) to the inspection standard (α), the assembly drawing (β), and the fabrication drawing (η), and gives departmental numbers (1, 2) to the inspection standard (α), the assembly drawing (β), and the fabrication drawing (η) based on the inputted department classification. The computer 11 stores inspection standard data such as the result data classification (PC002) and a departmental number (2) of the inspection standard (α), a part number (α) for specifying the inspection standard (α), and the like, in a main file of the result database 20, and stores assembly drawing data such as the result data classification (PC002) and the departmental numbers (1, 2) of the assembly drawing (β), a part number (β) for specifying the assembly drawing (β), and the like in a main file of the result database 20. The computer 11 stores fabrication drawing data such as the result data classification (PC002) and the departmental numbers (1, 2) of the fabrication drawing (η), a part number (η) for specifying the fabrication drawing (η) and the like, in a main file of the result database 20. Here, the inspection standard data includes contents of the inspection standard (α) (inspection name, inspection item, inspection routine, and the like), while the assembly drawing data includes contents of the assembly drawing (β) (details of the assembly drawing, creating department, instruction for use, and the like). The fabrication drawing data includes contents of the fabrication drawing (η) (details of the fabrication drawing, creating department, instruction for use, and the like).

When a process is selected from the items displayed on the display, a process input area used as the production factor input area and a departmental area corresponding to the process input area will be displayed on the display. An inspection process (P), an assembly process (Q), a treatment process (R), and those part numbers (P), (Q), and (R) (factor-type identification number) are inputted into the process input area via the input device, and department classifications of the inspection process (P), the assembly process (Q), and the treatment process (R) are inputted into the departmental area. The computer 11 determines that the inspection process (P), the assembly process (Q), and the treatment process (R) belong to the process with reference to the factor-type, the production factor, and the factor-type number stored in the storage unit or the hard disk, gives a process data classification (PC003) (third factor-type number) to the inspection process (P), the assembly process (Q), and the treatment process (R), and gives the departmental numbers (1, 2) to the inspection process (P), the assembly process (Q), and the treatment process (R) based on the inputted department classification. The computer 11 stores the inspection process data such as the process data classification (PC003) and the departmental number (2) of the inspection process (P), a part number (P) for specifying the inspection process (P), and the like, in a main file of the process database 21, and stores assembly process data such as the process data classification (PC003) and the departmental numbers (1, 2) of the assembly process (Q), the part number (Q) for specifying the assembly process(Q), and the like in the main file of the process database 21. The computer 11 stores treatment process data such as the process data classification (PC003) and the departmental numbers (1, 2) of the treatment process (R), a part number (R) for specifying the treatment process (R), and the like in the main file of the process database 21. Here, the inspection process data includes contents of the inspection process (P) (details of the inspection process, inspection location, and the like), while the assembly process data includes contents of the assembly process (Q) (details of the assembly process, assembly location, instruction for use, and the like). The treatment process data includes contents of the treatment process (R) (details of the treatment process, treatment location, and the like).

When a resource is selected from the items displayed on the display, a resource input area used as the production factor input area and a departmental area corresponding to the resource input area will be displayed on the display. A production line (δ), a production tool (ζ), and those part numbers (δ) and (ζ) (factor-type identification number) are inputted into the resource input area via the input device, and department classifications of the production line (δ) and the production tool (ζ) are inputted into the departmental area. The computer 11 determines that the production line (δ) and the production tool (ζ) belong to the resource with reference to the factor-type, the production factor, and the factor-type number stored in the storage unit or the hard disk, gives a resource data classification (PC004) (fourth factor-type number) to the production line (δ) and the production tool (ζ), and gives the departmental number (2) to the production line (δ) and the production tool (ζ) based on the inputted department classification. The computer 11 stores production line data such as the resource data classification (PC004) and the departmental number (2) of the production line (δ), a part number (δ) for specifying the production line (δ), and the like, in a main file of the resource database 22, and stores production tool data such as the resource data classification (PC004) and the departmental number (2) of the production tool (ζ), a part number (ζ) for specifying the production tool (ζ), and the like in the main file of the resource database 22. Here, the production line data includes contents of the production line (δ) (details of the production line, location of the production line, and the like), while the production tool data includes contents of the production tool (ζ) (name of the production tool, instruction for use, and the like).

When a site is selected from the items displayed on the display, a site input area used as the production factor input area and a departmental area corresponding to the site input area will be displayed on the display. A shop (A), a warehouse (B), and those part numbers (A) and (B) (factor-type identification number) are inputted into the site input area via the input device, and department classifications of the shop (A) and the warehouse (B) are inputted into the departmental area. The computer 11 determines that the shop (A) and the warehouse (B) belong to the site with reference to the factor-type, the production factor, and the factor-type number stored in the storage unit or the hard disk, gives a site data classification (PC005) (fifth factor-type number) to the shop (A) and the warehouse (B), and gives a departmental number (4) to the shop (A) and the warehouse (B) based on the inputted department classification. The computer 11 stores the shop data such as the site data classification (PC005) and the departmental number (4) of the shop (A), a part number (A) for specifying the shop (A), and the like in a main file of the site database 23, and stores warehouse data such as the site data classification (PC005) and the departmental number (4) of the warehouse (B), a part number (B) for specifying the warehouse (B), and the like in the main file of the site database 23. Here, the shop data includes contents of the shop (A) (name of the shop, location of the shop, and the like), while the warehouse data includes contents of the warehouse (B) (warehouse name, warehouse location, and the like).

An upper/lower two-term relationship (child-parent relationship) and an upper/lower three-term relationship (parent-middle-child relationship) as manufacturing department data, and an upper/lower two-term relationship (child-parent relationship) and an upper/lower three-term relationship (parent-middle-child relationship) as logistics department data are stored in the relational database 18. In the two-term relationship, the production factors are linked with an arbitrary first production factor (parent production factor) and a second production factor (child production factor) lying just below the first production factor. Based on the two-term relationship, the second production factor is specified from the first production factor, and conversely, the first production factor is specified from the second production factor. In the three-term relationship, the production factors are linked with an arbitrary first production factor (parent production factor), a second production factor (middle production factor) lying just below the first production factor, and a third production factor (child production factor) lying just below the second production factor. Based on the three-term relationship, the second production factor is specified from the first production factor, and the third production factor is specified from the first and second factors of production. Here, when the three-term relationship is converted into the two-term relationship, the second production factor (middle production factor) of the three-term relationship will be the second production factor (child production factor) of the two-term relationship. In other words, the child production factor of the two-term relationship will be the middle production factor of the three-term relationship.

A two-term relationship between the product (G) and the inspection process (P), a two-term relationship between the product (G) and the assembly process (Q), a two-term relationship between the product (G) and the treatment process (R), and a two-term relationship between the shop (A) and the warehouse (B) are stored in the relational database 18 as shown in Fig. 3. Further, a three-term relationship among the product (G), the inspection process (P), and the inspection standard (α), a three-term relationship among the product (G), the assembly process (Q), and the assembly drawing (β), a three-term relationship among the product (G), the assembly process (Q), and the part (γ), a three-term relationship among the product (G), the assembly process (Q), and the production line (δ), a three-term relationship among the product (G), the treatment process (R), and the part (ε), a three-term relationship among the product (G), the treatment process (R), and the production tool (ζ), a three-term relationship among the product (G), the treatment process (R), and the fabrication drawing (η), and a three-term relationship among the shop (A), the warehouse (B), and the product (G) are stored therein.

When a relation is selected from the items displayed on the display, a the two-term relationship input area (1) to a two-term relationship input area (n) and a three-term relationship input area (1) to a three-term relationship input area (n) are displayed on the display. The product (G) and the inspection process (P) are inputted into the two-term relationship input area (1) via the input device, and a department classification (2) is inputted into the departmental area corresponding to the two-term relationship input area (1). Further, the part number (G) for specifying the product (G) as the parent part number (first production factor), an item number (PC001) (first factor-type number) as a parent data classification, the part number (P) for specifying the inspection process (P) as a child part number (second production factor), and a process number (PC003) (third factor-type number) as the child data classification are inputted. Once these data are inputted, the computer 11 stores these data in the relational database 18. In the relational database 18, the product (G) and the inspection process (P) are connected to each other, and the product (G) and the inspection process (P) are linked with each other based on the two-term relationship. The product (G) and the assembly process (Q) are inputted into a two-term relationship input area (2), and the department classification (2) is inputted into the departmental area corresponding to the two-term relationship input area (2). Further, the part number (G) for specifying the product (G) as the parent part number (first production factor), the item number (PC001) (first factor-type number) as the parent data classification, the part number (Q) for specifying the assembly process (Q) as the child part number (second production factor), and the process number (PC003) (third factor-type number) as the child data classification are inputted. Once these data are inputted, the computer 11 stores these data in the relational database 18. In the relational database 18, the product (G) and the assembly process (Q) are connected to each other, and the product (G) and the assembly process (Q) are linked with each other based on the two-term relationship.

The product (G) and the treatment process (R) are inputted into a two-term relationship input area (3) via the input device, and the department classification (2) is inputted into the departmental area corresponding to the two-term relationship input area (3). Further, the part number (G) for specifying the product (G) as the parent part number (first production factor), the item number (PC001) (first factor-type number) as the parent data classification, the part number (R) for specifying the treatment process (R) as the child part number (second production factor), and the process number (PC003) (third factor-type number) as the child data classification are inputted. Once these data are inputted, the computer stores these data in the relational database. In the relational database, the product (G) and the treatment process (R) are connected to each other, and the product (G) and the treatment process (R) are linked with each other based on the two-term relationship. The shop (A) and the warehouse (B) are inputted into a two-term relationship input area (4), and the department classification (4) is inputted into the departmental area corresponding to the two-term relationship input area (4). Further, the part number (A) for specifying the shop (A) as the parent part number (first production factor), an item number (PC005) as the parent data classification (fifth factor-type number), the part number (B) for specifying the warehouse (B) as the child part number (second production factor), and a process number (PC005) as the child data classification (fifth factor-type number) are inputted. Once these data are inputted, the computer 11 stores these data in the relational database 18. In the relational database 18, the shop (A) and the warehouse (B) are connected to each other, and the shop (A) and the warehouse (B) are linked with each other based on the two-term relationship. It is to be noted that the two-term relationship between the product (G) and the inspection process (P), the two-term relationship between the product (G) and the assembly process (Q), and the two-term relationship between the product (G) and the treatment process (R) are treated as the data of the manufacturing department based on the department classification (2), and the two-term relationship between the shop (A) and the warehouse (B) is treated as the data of the logistics department based on the department classification (4).

The product (G), the inspection process (P), and the inspection standard (α) are inputted into the three-term relationship input area (1) displayed on the display via the input device, and the department classification (2) is inputted into the departmental area corresponding to the three-term relationship input area (1). Further, the part number (G) for specifying the product (G) as the parent part number (first production factor), the item number (PC001) (first factor-type number) as the parent data classification, the part number (P) for specifying the inspection process (P) as a middle part number (second production factor), the process number (PC003) as a middle data classification (third factor-type number), the part number (α) for specifying the inspection standard (α) as the child part number(third production factor), and a result number (PC002) (second factor-type number) as the child data classification are inputted. Once these data are inputted, the computer 11 stores these data in the relational database 18. In the relational database 18, the product (G), the inspection process (P), and the inspection standard (α) are connected to each other, and the product (G), the inspection process (P), and the inspection standard (α) are linked with each other based on the three-term relationship. The product (G), the assembly process (Q), and the assembly drawing (β) are inputted into a three-term relationship input area (2) via the input device, and the department classification (2) is inputted into the departmental area corresponding to the three-term relationship input area (2). Further, the part number (G) for specifying the product (G) as the parent part number (first production factor), the item number (PC001) (first factor-type number) as the parent data classification, the part number (Q) for specifying the assembly process (Q) as the middle part number (second production factor), the process number (PC003) as the middle data classification (third factor-type number), the part number (β) for specifying the assembly drawing (β) as the child part number (third production factor), and the result number (PC002) (second factor-type number) as the child data classification are inputted. Once these data are inputted, the computer 11 stores these data in the relational database 18. In the relational database 18, the product (G), the assembly process (Q), and the assembly drawing (β) are connected to each other, and the product (G), the assembly process (Q), and the assembly drawing (β) are linked with each other based on the three-term relationship.

The product (G), the assembly process (Q), and the part (γ) are inputted into a three-term relationship input area (3) via the input device, and the department classification (2) is inputted into the departmental area corresponding to the three-term relationship input area (3). Further, the part number (G) for specifying the product (G) as the parent part number (first production factor), the item number (PC001) (first factor-type number) as the parent data classification, the part number (Q) for specifying the assembly process (Q) as the middle part number (second production factor), the process number (PC003) as the middle data classification (third factor-type number), the part number (γ) for specifying the part (γ) as the child part number (third production factor), and the item number (PC001) (first factor-type number) as the child data classification are inputted. Once these data are inputted, the computer 11 stores these data in the relational database 18. In the relational database 18, the product (G), the assembly process (Q), and the part (γ) are connected to each other, and the product (G), the assembly process (Q), and the part (γ) are linked with based on the three-term relationship. The product (G), the assembly process (Q), and the production line (δ) are inputted into a three-term relationship input area (4) via the input device, and the department classification (2) is inputted into the departmental area corresponding to the three-term relationship input area (4). Further, the part number (G) for specifying the product (G) as the parent part number (first production factor), the item number (PC001) (first factor-type number) as the parent data classification, the part number (Q) for specifying the assembly process (Q) as the middle part number (second production factor), the process number (PC003) as the middle data classification (third factor-type number), the part number (δ) for specifying the production line (δ) as the child part number (third production factor), and a resource number (PC004) (fourth factor-type number) as the child data classification are inputted. Once these data are inputted, the computer 11 stores these data in the relational database 18. In the relational database 18, the product (G), the assembly process (Q), and the production line (δ) are connected to each other, and the product (G), the assembly process (Q), and the production line (δ) are linked with based on the three-term relationship.

The product (G), the treatment process (R), and the part (ε) are inputted into a three-term relationship input area (5) via the input device, and the department classification (2) is inputted into the departmental area corresponding to the three-term relationship input area (5). Further, the part number (G) for specifying the product (G) as the parent part number (first production factor), the item number (PC001) (first factor-type number) as the parent data classification, the part number (R) for specifying the treatment process (R) as the middle part number (second production factor), the process number (PC003) as the middle data classification (third factor-type number), the part number (ε) for specifying the part (ε) as the child part number (third production factor), and the item number (PC001) (first factor-type number) as the child data classification are inputted. Once these data are inputted, the computer 11 stores these data in the relational database 18. In the relational database 18, the product (G), the treatment process (R), and the part (ε) are connected to each other, and the product (G), the treatment process (R), and the part (ε) are linked with based on the three-term relationship. The product (G), the treatment process (R), and the production tool (ζ) are inputted into a three-term relationship input area (6) via the input device, and the department classification (2) is inputted into the departmental area corresponding to the three-term relationship input area (6). Further, the part number (G) for specifying the product (G) as the parent part number (first production factor), the item number (PC001) (first factor-type number) as the parent data classification, the part number (R) for specifying the treatment process (R) as the middle part number (second production factor), the process number (PC003) as the middle data classification (third factor-type number), the part number (ζ) for specifying the production tool (ζ) as the child part number (third production factor), and the resource number (PC004) (fourth factor-type number) as the child data classification are inputted. Once these data are inputted, the computer 11 stores these data in the relational database 18. In the relational database 18, the product (G), the treatment process (R), and the production tool (ζ) are connected to each other, and the product (G), the treatment process (R), and the production tool (ζ) are linked with each other based on the three-term relationship.

The product (G), the treatment process (R), and the fabrication drawing (η) are inputted into a three-term relationship input area (7) via the input device, and the department classification (2) is inputted into the departmental area corresponding to the three-term relationship input area (7). Further, the part number (G) for specifying the product (G) as the parent part number (first production factor), the item number (PC001) (first factor-type number) as the parent data classification, the part number (R) for specifying the treatment process (R) as the middle part number (second production factor), the process number (PC003) as the middle data classification (third factor-type number), the part number (η) for specifying the fabrication drawing (η) as the child part number (third production factor), and the result number (PC002) (second factor-type number) as the child data classification are inputted. Once these data are inputted, the computer 11 stores these data in the relational database 18. In the relational database 18, the product (G), the treatment process (R), and the fabrication drawing (η) are connected to each other, and the product (G), the treatment process (R), and the fabrication drawing (η) are linked with each other based on the three-term relationship. The shop (A), the warehouse (B), and the product (G) are inputted into a three-term relationship input area (8) via the input device, and the department classification (4) is inputted into the departmental area corresponding to the three-term relationship input area (8). Further, the part number (A) for specifying the shop (A) as the parent part number (first production factor), a site number (PC005) (fifth factor-type number) as the parent data classification, the part number (B) for specifying the warehouse (B) as the middle part number (second production factor), the site number (PC005) as the middle data classification (fifth factor-type number), the part number (G) for specifying the product (G) as the child part number (third production factor), and the item number (PC001) (first factor-type number) as the child data classification are inputted. Once these data are inputted, the computer 11 stores these data in the relational database 18. In the relational database 18, the shop (A), the warehouse (B), and the product (G) are connected to each other, and the shop (A), the warehouse (B), and the product (G) are linked with each other based on the three-term relationship.

It is to be noted that the three-term relationship among the product (G), the inspection process (P), and the inspection standard (α), the three-term relationship among the product (G), the assembly process (Q), and the assembly drawing (β), the three-term relationship among the product (G), the assembly process (Q), and the part (γ), the three-term relationship among the product (G), the assembly process (Q), and the production line (δ), the three-term relationship among the product (G), the treatment process (R), and the part (ε), the three-term relationship among the product (G), the treatment process (R), and the production tool (ζ), and the three-term relationship among the product (G), the treatment process (R), and the fabrication drawing (η) are treated as the data of the manufacturing department based on the department classification (2). The three-term relationship among the shop (A), the warehouse (B), and the product (G) is treated as the data of the logistics department based on the department classification (4).

In this system 10, a plurality of two-term relationships of different types (by department, by factor-type, by factor) extracted from the relational database 18 are integrated, while a plurality of three-term relationships of different types (by department, by factor-type, by factor) extracted from the relational database 18 are integrated, the two-term relationship and the three-term relationship are integrated, and a plurality of production factors of different types extracted from the first to fifth factor-type databases 19, 20, 21, 22, and 23 are connected in series from a superordinate concept toward a subordinate concept thereof according to the integrated two-term relationship, the integrated three-term relationship, and the integrated two-term/three-term relationship to thereby create a production system corresponding to the article (1). The creation of the production system of the article (1) executed by the computer 11 will be described based on Fig. 4 as follows.

When creation of the production system is instructed via the input device, the computer 11 extracts the two-term relationship between the shop (A) and the warehouse (B) and the three-term relationship among the shop (A), the warehouse (B), and the product (G) from the relational database 18 as the logistics department data. Next, the computer 11 interprets the site number (PC005) of the parent data classification of the shop (A) as the site data classification (PC005) of the site database 23 to extract data of the shop (A) from the site database 23 based on the part number (A) and the site data classification (PC005), and interprets the site number (PC005) of the middle data classification of the warehouse (B) as the site data classification (PC005) (fifth factor-type number) of the site database 23 to extract data of the warehouse (B) from the site database 23 based on the part number (B) and the site data classification (PC005). Further, it interprets the item number (PC001) of the child data classification of the product (G) as the item data classification (PC001) (first factor-type number) of the item database 19 to extract data of the product (G) from the item database 19 based on the part number (G) and the item data classification (PC001).

The computer 11 extracts the two-term relationship between product (G) and the inspection process (P) and the three-term relationship among the product (G), the inspection process (P), and the inspection standard (α) from the relational database 18 as the manufacturing department data. Next, the computer 11 interprets the process number (PC003) of the middle data classification of the inspection process (P) as the process data classification (PC003) (third factor-type number) of the process database 21 to extract data of the inspection process (P) from the process database 21 based on the part number (P) and the process data classification (PC003), and interprets the result number (PC002) of the child data classification of the inspection standard (α) as the result data classification (PC002) (second factor-type number) of the result database 20 to extract data of the inspection standard (α) from the result database 20 based on the part number (α) and the result data classification (PC002).

The computer 11 extracts the two-term relationship between the product (G) and the assembly process (Q), the three-term relationship among the product (G), the assembly process (Q), and the assembly drawing (β), the three-term relationship among the product (G), the assembly process (Q), and the part (γ), the three-term relationship among the product (G), the assembly process (Q), and the production line (δ) from the relational database 18 as the manufacturing department data. Next, the computer 11 interprets the process number (PC003) of the middle data classification of the assembly process (Q) as the process data classification (PC003) (third factor-type number) of the process database 21 to extract data of the assembly process (Q) from the process database 21 based on the part number (Q) and the process data classification (PC003), and interprets the result number (PC002) of the child data classification of the assembly drawing (β) as the result data classification (PC002) (second factor-type number) of the result database 20 to extract the data of the assembly drawing (β) from the result database 20 based on the part number (β) and the result data classification (PC002). The computer 11 interprets the item number (PC001) of the child data classification of the part (γ) as the item data classification (PC001) (first factor-type number) of the item database 19 to extract data of the part (γ) from the item database 19 based on the part number (γ) and the item data classification (PC001), and interprets the resource number (PC004) of the child data classification of the production line (δ) as the resource data classification (PC004) (fourth factor-type number) of the resource database 22 to extract data of the production line (δ) from the resource database 22 based on the part number (δ) and the resource data classification (PC004).

The computer 11 extracts the two-term relationship between the product (G) and the treatment process (R), the three-term relationship among the product (G), the treatment process (R), and the part (ε), the three-term relationship among the product (G), the treatment process (R), and the production tool (ζ), the three-term relationship among the product (G), the treatment process (R), and the fabrication drawing (η) from the relational database 18 as the manufacturing department data. Next, the computer 11 interprets the process number (PC003) of the middle data classification of the treatment process (R) as the process data classification (PC003) (third factor-type number) of the process database 21 to extract data of the treatment process (R) from the process database 21 based on the part number (R) and the process data classification (PC003), and interprets the item number (PC001) of the child data classification of the part (ε) as the item data classification (PC001) (first factor-type number) of the item database 19 to extract data of the part (ε) from the item database 19 based on the part number (ε) and the item data classification (PC001). The computer 11 interprets the resource number (PC004) of the child data classification of the production tool (ζ) as the resource data classification (PC004) (fourth factor-type number) of the resource database 22 to extract data of the production tool (ζ) from the resource database 22 based on the part number (ζ) and the resource data classification (PC004), and interprets the result number (PC002) of the child data classification of the fabrication drawing (η) as the result data classification (PC002) (second factor-type number) of the result database 20 to extract data of the fabrication drawing (η) from the resource database 20 based on the part number (η) and the result data classification (PC002).

When extracting a plurality of two-term relationships of various types between the production factors and a plurality of three-term relationships of various types from the relational database 18, and also extracting a plurality of production factors of various types for forming the two-term relationship and the three-term relationship from the factor-type database 17, the computer 11 refers to the parent data classification of the first production factor and the child data classification of the second production factor that form the two-term relationship, and combines the production factors of the same data classification in these two-term relationships to thereby integrate a plurality of two-term relationships of various types thus extracted. While referring to the parent data classification of the first production factor and the child data classification of the second production factor that form the two-term relationship, the computer 11 refers to the parent data classification of the first production factor, the middle data classification of the second production factor, and the child data classification of the third production factor that form the three-term relationship, and combines the production factors of the same data classification in these two-term relationships and three-term relationships to thereby integrate a plurality of two-term relationships of various types and a plurality of three-term relationships of various types thus extracted. Further, the computer 11 refers to the parent data classification of the first production factor, the middle data classification of the second production factor, and the child data classification of the third production factor that form the three-term relationship, and combines the production factors of the same data classification in these three-term relationships to thereby integrate a plurality of three-term relationships of various types thus extracted. One concrete example is as follows.

The computer 11 determines based on the data classification (PC001) and the part number (G) that the products (G) are the same common production factor in the three-term relationship among the shop (A), the warehouse (B), and the product (G) and the three-term relationship among the product (G), the inspection process (P), and the inspection standard (α), and combines the products (G) in these three-term relationships. As a result, the three-term relationship among the shop (A), the warehouse (B), and the product (G), and the three-term relationship among the product (G), the inspection process (P), and the inspection standard (α) are integrated (three-term relationship integrating means), so that a route (technical information route) in which the warehouse (B) lies just below the shop (A), the product (G) lies just below the warehouse (B), the inspection process (P) lies just below the product (G), and the inspection standard (α) lies just below the inspection process (P) is built. The computer 11 determines based on the data classification (PC001) and the part number (G) that the products (G) are the same common production factor in the two-term relationship between product (G) and the inspection process (P), the two-term relationship between the product (G) and the assembly process (Q), and the two-term relationship between the product (G) and the treatment process (R), combines the products (G) in these two-term relationships, and connects the inspection process (P), the assembly process (Q), and the treatment process (R) just below the product (G) in parallel. As a result, the two-term relationship between product (G) and the inspection process (P), the two-term relationship between the product (G) and the assembly process (Q), and the two-term relationship between the product (G) and the treatment process (R) are integrated (two-term relationship integrating means), so that a route (technical information route) in which the inspection process (P), the assembly process (Q), and the treatment process (R) lie just below the product (G) in parallel is built.

Next, the computer 11 determines based on the data classification (PC001) and the part number (G) that the products (G) are the same common production factor in the three-term relationship among the product (G), the assembly process (Q), and the assembly drawing (β), the three-term relationship among the product (G), the assembly process (Q), and the part (γ), and the three-term relationship among the product (G), the assembly process (Q), and the production line (δ) and also determines based on the data classification (PC003) and the part number (Q) that the assembly processes (Q) are the same common production factor, combines the products (G) in these three-term relationships, combines the assembly processes (Q) in these three-term relationships, and connects the assembly drawing (β), the part (γ), and the production line (δ) just below the assembly process(Q) in parallel. As a result, the three-term relationship among the product (G), the assembly process (Q), and the assembly drawing (β), the three-term relationship among the product (G), the assembly process (Q), and the part (γ), and the three-term relationship among the product (G), the assembly process (Q), and the production line (δ) are integrated (three-term relationship integrating means), so that a route (technical information route) in which the assembly process (Q) lies just below the product (G), and the assembly drawing (β), the part (γ), and the production line (δ) lie just below the assembly process (Q) in parallel is built.

Further, the computer 11 determines based on the data classification (PC001) and the part number (G) that the products (G) are the same common production factor in the three-term relationship among the product (G), the treatment process (R), and the part (ε), the three-term relationship among the product (G), the treatment process (R), and the production tool (ζ), and the three-term relationship among the product (G), the treatment process (R), and the fabrication drawing (η), and also determines based on the data classification (PC003) and the part number (R) that the treatment processes (R) are the same common production factor, combines the products (G) in these three-term relationships, combines the treatment processes (R) in these three-term relationships, and connects the part (ε), the production tool (ζ), and the fabrication drawing (η) just below the treatment process (R) in parallel. As a result, the three-term relationship among the product (G), the treatment process (R), and the part (ε), the three-term relationship among the product (G), the treatment process (R), and the production tool (ζ), and the three-term relationship among the product (G), the treatment process (R), and the fabrication drawing (η) are integrated (three-term relationship integrating means), so that a route (technical information route) in which the treatment process (R) lies just below the product (G), and the part (ε), the production tool (ζ), and the fabrication drawing (η) lie just below the treatment process (R) in parallel is built. When building these routes, the computer 11 builds a series of routes in which the warehouse (B) lies below the shop (A); the product (G), below the warehouse (B); the inspection process (P), the assembly process (Q), and the treatment process (R), below the product (G); the inspection standard (α), below the inspection process (P); the assembly drawing (β), the part (γ), and the production line (δ), below the assembly process (Q); and the part (ε), the production tool (ζ), and the fabrication drawing (η), below the treatment process (R).

When integrating the two-term relationships and also integrating the three-term relationships to thereby build the route connected in series from the higher level toward the lower level, the computer 11 incorporates each of the production factors extracted from the factor-type database 17 in the route, and creates a production system in which a plurality of production factors of various types are connected in series from a superordinate concept toward a subordinate concept thereof (production system creating means). In the created production system, the shop (A) lies at the top, and the warehouse (B), the product (G), the inspection process (P), the assembly process (Q), the treatment process (R), the inspection standard (α), the assembly drawing (β), the part (γ), the production line (δ), the part (ε), the production tool (ζ), and the fabrication drawing (η) are located in a line toward the lower level therefrom, as shown in Fig. 4. The computer 11 stores the production system of the created article (1) in the storage unit or the hard disk (production system storing means), and outputs the production system of the created article (1) via the output device (production system outputting means). It is to be noted that after creating the production system of the article (1), production systems to an article (2) to an article (n) can be created, and the created production systems of the article (2) to the article (n) can be stored in the storage unit or the hard disk (production system storing means); and any one of the created production systems of the article (1) to article (n) can be outputted via the output device (production system outputting means). In the creation of the new production system of the article, not only the existing production factors, two-term relationships, and three-term relationships can be used, but also a plurality of newly defined production factors of various types can be used, and a plurality of two-term relationships of various types and a plurality of three-term relationships of various types, which are newly set can be used.

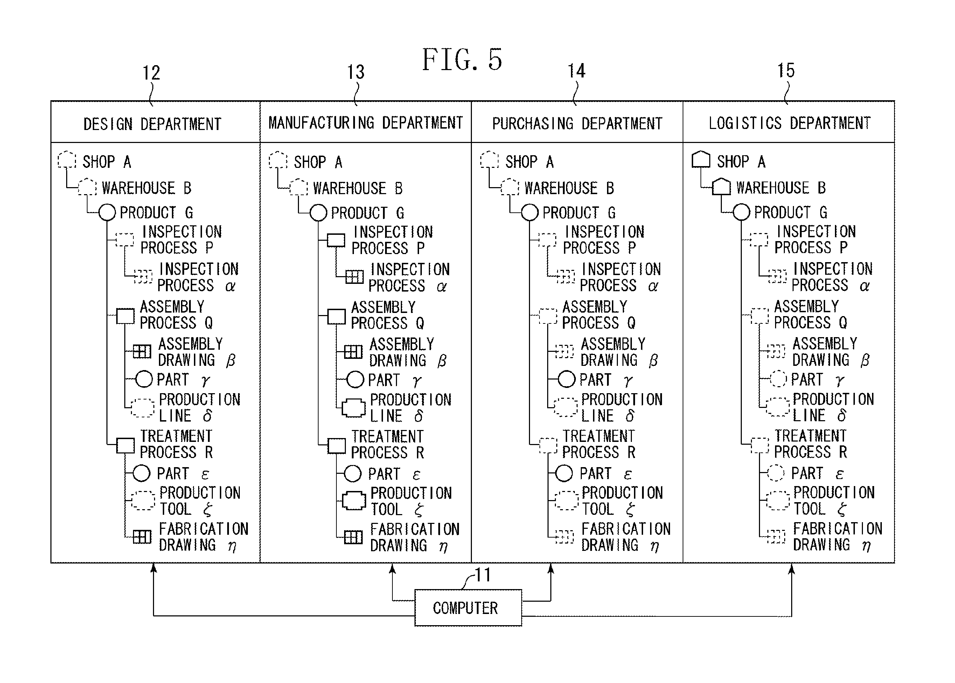

Fig. 5 is a view showing one example of the production system outputted by department. In this system 10, only the production factors represented by the solid lines shown in Fig. 5 are outputted from the output device arranged in each of the departments 12, 13, 14, and 15, whereas the production factors represented by the dotted lines are not outputted in principle. The computer 11 transfers the created whole production system to the terminal device arranged in each of the departments 12, 13, 14, and 15, causes the display arranged in each of the departments 12, 13, 14, and 15 to display the departmental production system formed only of the required production factors by department based on the department-type numbers (1, 2, 3, 4) (departmental production system outputting means), and causes the printer arranged in each of the departments 12, 13, 14, and 15 to print the departmental production system (production system outputting means).

For example, as shown in Figs. 1 and 5, the production system of the article (1) formed of the product (G), the assembly process (Q), the treatment process (R), the assembly drawing (β), the part (γ), the part (ε), and the fabrication drawing (η) to which the departmental number 1 is set is displayed on the display arranged in the design department 12, but the shop (A), the warehouse (B), the inspection process (P), the inspection standard (α), the production line (δ), and the production tool (ζ) to which the other departmental numbers 2, 3, and 4 are set are not displayed thereon. The production system of the article (1) formed of the product (G), the inspection process (P), the assembly process (Q), the treatment process (R), the inspection standard (α), the assembly drawing (β), the part (γ), the production line (δ), the part (ε), the production tool (ζ), and the fabrication drawing (η) to which the departmental number 2 is set is displayed on the display arranged in the manufacturing department 13, but the shop (A) and the warehouse (B) to which the other departmental numbers 1, 3, and 4 are set are not displayed thereon. In addition, the production system of the article (1) formed of the product (G), the part (γ), and the part (ε) to which the departmental number 3 is set is displayed on the display arranged in the purchasing department 14, but the shop (A), the warehouse (B), the inspection process (P), the assembly process (Q), the treatment process (R), the inspection standard (α), the assembly drawing (β), the production line (δ), the production tool (ζ), and the fabrication drawing (η) to which the other departmental numbers 1, 2, and 4 are set are not displayed thereon. The production system of the article (1) formed of the shop (A), the warehouse (B), and the product (G) to which the departmental number 4 is set is displayed on the display arranged in the logistics department 15, but the inspection process (P), the assembly process (Q), the treatment process (R), the inspection standard (α), the assembly drawing (β), the part (γ), the production line (δ), the part (ε), the production tool (ζ), and the fabrication drawing (η) to which the other departmental numbers 1, 2, and 3 are set are not displayed thereon. However, the whole production system may also be displayed on the display in each of the departments 12, 13, 14, and 15 by selecting an overall display.

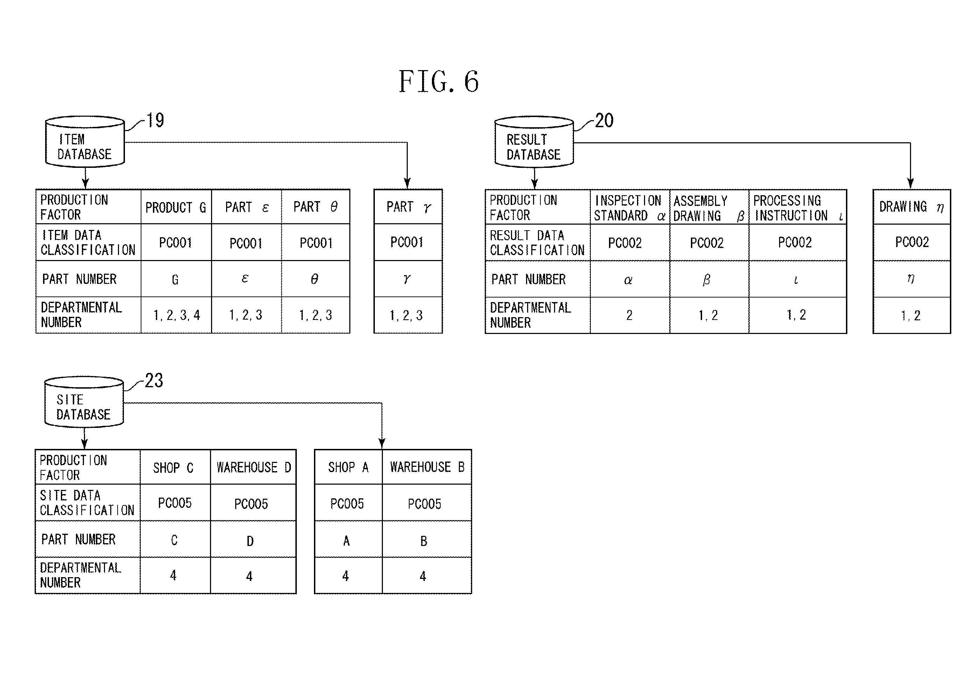

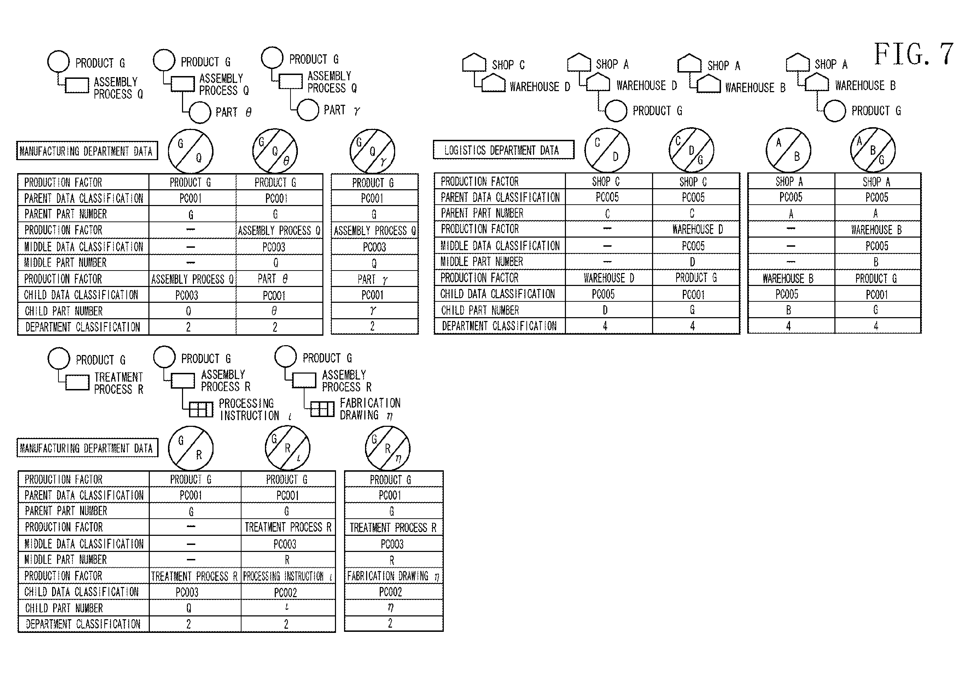

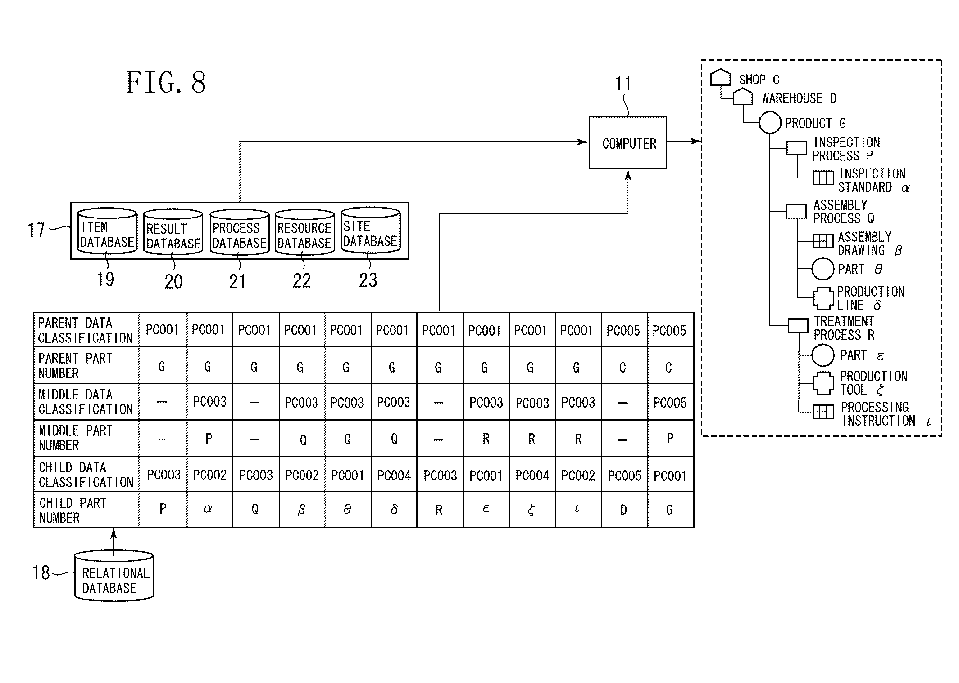

Fig. 6 is a view showing another example of a plurality of production factors of various types stored in the factor-type database 17, while Fig. 7 is a view showing another example of the two-term relationship and the three-term relationship between and among the production factors stored in the relational database 18. Fig. 8 is a view for explaining the new integration of the two-term relationships or integration of the three-term relationships executed by the computer 11. In the embodiments shown in Figs. 6 to 8, a part of the production factors stored in the main file of the factor-type database 17 is changed (altered), and a part of first to third production factors stored in the main file of the relational database 18 is changed (altered). In this system 10, each of the production factors stored in the factor-type database 17 can be altered via the input device, and at least one of the first production factors, second production factors, and third production factors stored in the relational database 18 can be changed. The alteration of the production factors and the alteration of the first to third production factors include change, addition, and deletion thereof.

One example of the change of the production factors stored in the factor-type database 17 will be described using a case in which the part (γ) is changed to a part (θ); the fabrication drawing (η), to a processing instruction (I); the shop (A), to a shop (C); and the warehouse (B), to a warehouse (D) from the state shown in Fig. 2 as an example as follows. When a production factor change is selected from the items displayed on the display, a production factor change area will be displayed on the display. In the production factor change area, the part (γ) before the change is inputted into an old item area (1); the part (θ) and its part number (θ) (factor-type identification number after the change are inputted into a new item area (1), and department classifications (1, 2, 3) of the part (θ) are also inputted into a departmental area corresponding to the new item area (1). The fabrication drawing (η) before the change is inputted into an old result area (1), the processing instruction (I) and its part number (I) (factor-type identification number) after the change are inputted into a new result area (1), and department classifications (1, 2) of the processing instruction (I) are also inputted into the departmental area corresponding to the new result area (1). The shop (A) before the change is inputted into an old site area (1), the shop (C) and its part number (C) (factor-type identification number) after the change are inputted into a new site area (1), and the department classification (4) of the shop (C) is also inputted into a departmental area corresponding to the new site area (1). Further, the warehouse (B) before the change is inputted into an old site area (2), the warehouse (D) and its part number (D) (factor-type identification number) after the change are inputted into a new site area (2), and the department classification (4) of the warehouse (D) is also inputted into a departmental area corresponding to the new site area (2).

When a change instruction of the production factor is inputted from the input device after inputting these data, The computer 11 deletes the data of the part (γ) before the change from the main file of the item database 19, deletes the data of the fabrication drawing (η) before the change from the main file of the result database 20, and deletes the data of the shop (A) and the data of the warehouse (B) before the change from the main file of the site database 23. It is to be noted that the data of the part (γ) deleted from the main file of the item database 19 is stored in the subfile of the item database 19, and the data of the fabrication drawing (η) deleted from the main file of the result database 20 is stored in the subfile of the result database 20. The data of the shop (A) and the data of the warehouse (B) deleted from the main file of the site database 23 are stored in the subfile of the site database 23.

The computer 11 determines that the part (θ) belongs to the item with reference to the factor-type and factor-type number stored in the storage unit or the hard disk, gives a first factor-type number (PC001) to the part (θ), and gives the departmental numbers (1, 2, 3) to the part (θ) based on the inputted department classification, and subsequently stores part data such as the factor-type number (PC001) and the departmental numbers (1, 2, 3) of the part(θ), the part number (θ) for specifying the part (θ), and the like, in the main file of the item database 19. The part data includes contents of the part (θ) (part name, producing district, instruction for use, durable years, amount of money, delivery date, and the like). The computer 11 determines that the processing instruction (I) belongs to the result with reference to the factor-type and factor-type number stored in the storage unit or the hard disk, gives the second factor-type number (PC002) to the processing instruction (I) and gives the departmental numbers (1, 2) to the processing instruction (I) based on the inputted department classification, and subsequently stores the data of the processing instruction, such as the factor-type number (PC002) and the departmental numbers (1, 2) of the processing instruction (I), the part number (I) for specifying the processing instruction (I), and the like in the main file of the result database 20. The data of the processing instruction includes contents of the processing instruction (I) (details of processing instruction, creating department, instruction for use, and the like).

The computer 11 determines that the shop (C) belongs to the site with reference to the factor-type and factor-type number stored in the storage unit or the hard disk, gives the fourth factor-type number (PC004) to the shop (C) and gives the departmental number (4) to the shop (C) based on the inputted department classification, and subsequently stores the shop data, such as the factor-type number (PC004) and the departmental number (4) of the shop (C), the part number (C) for specifying the shop (C), and the like in the main file of the site database 23. The shop data includes contents of the shop (C) (name of the shop, location of the shop, and the like). The computer 11 determines that the warehouse (D) belongs to the site with reference to the factor-type and factor-type number stored in the storage unit or the hard disk, gives the fourth factor-type number (PC004) to the warehouse (D) and gives the departmental number (4) to the warehouse (D) based on the inputted department classification, and subsequently stores warehouse data such as the factor-type number (PC004) and the departmental number (4) of the warehouse (D), the part number (D) for specifying the warehouse (D), and the like, in the main file of the site database 23. The warehouse data includes contents of the warehouse (D) (warehouse name, warehouse location, work description, and the like).

One example of the change of the first to third production factors stored in the relational database 18 will be described using a case in which the part (γ) (third production factor) is changed to a part (θ) (third production factor); the fabrication drawing (η) (third production factor), to the processing instruction (I) (third production factor); the shop (A) (first production factor), to the shop (C) (first production factor); and the warehouse (B) (second production factor), to the warehouse (D) (second production factor) as an example as follows.

When a relation change is selected from the items displayed on the display, a two-term relationship change area and a three-term relationship change area will be displayed on the display. In the two-term relationship change area, the shop (A) before the change is inputted into an old first production factor area (1); the shop (C) after the change is inputted into a new first production factor area (1) and the part number (C) (factor-type identification number) for specifying the shop (C) as the parent part number and the site number (PC005) (fifth factor-type number) as the parent data classification are also inputted therein; and the department classification (4) is inputted into a departmental area corresponding to the new first production factor area (1). The warehouse (B) before the change is inputted into an old second production factor area (2); the warehouse (D) after the change is inputted into a new second production factor area (2) and the part number (D) (factor-type identification number) for specifying the warehouse (D) as the parent part number and the site number (PC005) as the parent data classification (fifth factor-type number) are also inputted therein; and the department classification (4) is inputted into a departmental area corresponding to a new first production factor area (2).

When a change instruction of the two-term relationship is inputted from the input device after inputting these data, The computer 11 changes the two-term relationship between the shop (A) and the warehouse (B) stored in the main file of the relational database 18 to the two-term relationship between the shop (C) and the warehouse (D). When the two-term relationship is changed, the part number (C) for specifying the shop (C) as the parent part number (first production factor), the site number (PC005) (fifth factor-type number) which is the parent data classification of the shop (C), the part number (D) for specifying the warehouse (D) as the child part number (second production factor), and the site number (PC005) (fifth factor-type number) which is the child data classification of the warehouse (D) are stored in the relational database 18. In the relational database 18, the shop (C) and the warehouse (D) are connected to each other, and the shop (C) and the warehouse (D) are linked with each other based on the two-term relationship. It is to be noted that when the two-term relationship between the shop (A) and the warehouse (B) is changed to the two-term relationship between the shop (C) and the warehouse (D), the three-term relationship among the shop (A), the warehouse (B), and the product (G) is automatically changed to a three-term relationship among the shop (C), the warehouse (D), and the product (G). The two-term relationship between the shop (C) and the warehouse (D) and the three-term relationship among the shop (C), the warehouse (D), and the product (G) are treated as the data of the logistics department based on the department classification (4). The two-term relationship between the shop (A) and the warehouse (B) and the three-term relationship among the shop (A), the warehouse (B), and the product (G) are stored in the subfile of the relational database 18.

In the three-term relationship change area displayed on the display, the part (γ) before the change is inputted into an old third production factor area (1); the part (θ) after the change is inputted into a new third production factor area (1), and a part number (θ) (factor-type identification number) for specifying the part (θ) as the child part number and the item number (PC001) (first factor-type number) as the child data classification are also inputted therein; and the department classification (2) is inputted into a departmental area corresponding to the new third production factor area (1). Further, the fabrication drawing (η) before the change is inputted into an old third production factor area (2); the processing instruction (I) after the change is inputted into a new third production factor area (2), and the part number (I) (factor-type identification number) for specifying the processing instruction (I) as the child part number and the result number (PC002) (second factor-type number) as the child data classification are also inputted therein; and the department classification (2) is inputted into a departmental area corresponding to the new third production factor area (2). When a change instruction of the three-term relationship is inputted from the input device after inputting these data, The computer 11 changes the three-term relationship among the product (G), the assembly process (Q), and the part (γ) stored in the main file of the relational database 18 to a three-term relationship among the product (G), the assembly process (Q), and the part (θ), and changes the three-term relationship among the product (G), the treatment process (R), and the fabrication drawing (η) to a three-term relationship of the product (G), the treatment process (R), and the processing instruction (I).

When the three-term relationship is changed, the part number (G) for specifying the product (G) as the parent part number (first production factor), the item number (PC001) (first factor-type number) which is the parent data classification of the product (G), the part number (Q) for specifying the assembly process (Q) as the middle part number (second production factor), the process number (PC003) as the middle data classification (third factor-type number), the part number (γ) for specifying the part (γ) as the child part number (third production factor), and the item number (PC001) (first factor-type number) as the child data classification are stored in the relational database 18. In the relational database 18, the product (G), the assembly process (Q), and the part (ε) are connected to each other, and the product (G), the assembly process (Q), and the part (γ) are linked with each other based on the three-term relationship. The part number (G) for specifying the product (G) as the parent part number (first production factor), the item number (PC001) (first factor-type number) which is the parent data classification of the product (G), the part number (Q) for specifying the assembly process (Q) as the middle part number (second production factor), the process number (PC003) as the middle data classification (third factor-type number), the part number (I) for specifying the processing instruction (I) as the child part number (third production factor), and the result number (PC002) (second factor-type number) as the child data classification are stored in the relational database 18. In the relational database 18, the product (G), the assembly process (Q), and the processing instruction (I) are connected to each other, and the product (G), the assembly process (Q), and the processing instruction (I) are linked with each other based on the three-term relationship. The three-term relationship among the product (G), the assembly process (Q), and the part (γ) and a three-term relationship among the product (G), the assembly process (Q), and the processing instruction (I) are treated as the data of the manufacturing department based on the department classification (2). The three-term relationship among the product (G), the assembly process (Q), and the part (γ) and the three-term relationship among the product (G), the treatment process (R), and the fabrication drawing (η) are stored in the subfile of the relational database 18.

The creation of the production system of the article (1) executed by the computer 11 after the production factor is changed will be described based on Fig. 8 as follows. When creation of the production system is instructed via the input device, the computer 11 extracts the two-term relationship between the shop (C) and the warehouse (D) and the three-term relationship among the shop (C), the warehouse (D), and the product (G) from the relational database 18 as the logistics department data. Next, the computer 11 interprets the site number (PC005) of the parent data classification of the shop (C) as the site data classification (PC005) of the site database 23 to extract data of the shop (C) from the site database 23 based on the part number (C) and the site data classification (PC005), and interprets the site number (PC005) of the middle data classification of the warehouse (D) as the site data classification (PC005) (fifth factor-type number) of the site database 23 to extract data of the warehouse (D) from the site database 23 based on the part number (D) and the site data classification (PC005). Further, it interprets the item number (PC001) of the child data classification of the product (G) as the item data classification (PC001) (first factor-type number) of the item database 119 to extract data of the product (G) from the item database 19 based on the part number (G) and the item data classification (PC001).

The computer 11 extracts the two-term relationship between product (G) and the inspection process (P) and the three-term relationship among the product (G), the inspection process (P), and the inspection standard (α) from the relational database 18 as the manufacturing department data. Next, the computer 11 interprets the process number (PC003) of the middle data classification of the inspection process (P) as the process data classification (PC003) (third factor-type number) of the process database 21 to extract data of the inspection process (P) from the process database 21 based on the part number (P) and the process data classification (PC003), and interprets the result number (PC002) of the child data classification of the inspection standard (α) as the result data classification (PC002) (second factor-type number) of the result database 20 to extract data of the inspection standard (α) from the result database 20 based on the part number (α) and the result data classification (PC002).

the computer 11 extracts the two-term relationship between the product (G) and the assembly process (Q), the three-term relationship among the product (G), the assembly process (Q), and the assembly drawing (β), the three-term relationship among the product (G), the assembly process (Q), and the part (θ), and the three-term relationship among the product (G), the assembly process (Q), and the production line (δ) from the relational database 18 as the manufacturing department data. Next, the computer 11 interprets the process number (PC003) of the middle data classification of the assembly process (Q) as the process data classification (PC003) (third factor-type number) of the process database 21 to extract data of the assembly process (Q) from the process database 21 based on the part number (Q) and the process data classification (PC003), and interprets the result number (PC002) of the child data classification of the assembly drawing (β) as the result data classification (PC002) (second factor-type number) of the result database 20 to extract the data of the assembly drawing (β) from the result database 20 based on the part number (β) and the result data classification (PC002). The computer 11 interprets the item number (PC001) of the child data classification of the part (θ) as the item data classification (PC001) (first factor-type number) of the item database 19 to extract data of the part (θ) from the item database 19 based on the part number (θ) and the item data classification (PC001), and interprets the resource number (PC004) of the child data classification of the production line (δ) as the resource data classification (PC004) (fourth factor-type number) of the resource database 22 to extract data of the production line (δ) from the resource database 22 based on the part number (δ) and the resource data classification (PC004).

The computer 11 extracts the two-term relationship between the product (G) and the treatment process (R), the three-term relationship among the product (G), the treatment process (R), and the part (ε), the three-term relationship among the product (G), the treatment process (R), and the production tool (ζ), and the tree-term relationship among the product (G), the treatment process (R), and the processing instruction (I) from the relational database 18 as the manufacturing department data. Next, the computer 11 interprets the process number (PC003) of the middle data classification of the treatment process (R) as the process data classification (PC003) (third factor-type number) of the process database 21 to extract data of the treatment process (R) from the process database 21 based on the part number (R) and the process data classification (PC003), and interprets the item number (PC001) of the child data classification of the part (ε) as the item data classification (PC001) (first factor-type number) of the item database 19 to extract data of the part (ε) from the item database 19 based on the part number (ε) and the item data classification (PC001). The computer 11 interprets the resource number (PC004) of the child data classification of the production tool (ζ) as the resource data classification (PC004) (fourth factor-type number) of the resource database 22 to extract data of the production tool (ζ) from the resource database 22 based on the part number (ζ) and the resource data classification (PC004), and interprets the result number (PC002) of the child data classification of the processing instruction (I) as the result data classification (PC002) (second factor-type number) of the result database 20 to extract data of the processing instruction (I) from the resource database 20 based on the part number (I) and the result data classification (PC002).

The computer 11 determines based on the data classification (PC001) and the part number (G) that the products (G) are the same common production factor in the three-term relationship among the shop (C), the warehouse (D), and the product (G) and the three-term relationship among the product (G), the inspection process (P), and the inspection standard (α), and combines the products (G) in these three-term relationships. As a result, the three-term relationship among the shop (C), the warehouse (D), and the product (G) and the three-term relationship among the product (G), the inspection process (P), and the inspection standard (α) are integrated (three-term relationship integrating means), so that a route (technical information route) in which the warehouse (D) lies just below the shop (C), the product (G) lies just below the warehouse (D), the inspection process (P) lies just below the product (G), and the inspection standard (α) lies just below the inspection process (P) is built. The computer 11 determines based on the data classification (PC001) and the part number (G) that the products (G) are the same common production factor in the two-term relationship between product (G) and the inspection process (P), the two-term relationship between the product (G) and the assembly process (Q), and the two-term relationship between the product (G) and the treatment process (R), combines the products (G) of these two-term relationships, and connects the inspection process (P), the assembly process (Q), and the treatment process (R) just below the product (G) in parallel. As a result, the two-term relationship between product (G) and the inspection process (P), the two-term relationship between the product (G) and the assembly process (Q), and the two-term relationship between the product (G) and the treatment process (R) are integrated (two-term relationship integrating means), so that a route (technical information route) in which the inspection process (P), the assembly process (Q), and the treatment process (R) lie just below the product (G) in parallel is built.

Next, the computer 11 determines based on the data classification (PC001) and the part number (G) that the products (G) are the same common production factor in the three-term relationship among the product (G), the assembly process (Q), and the assembly drawing (β), the three-term relationship among the product (G), the assembly process (Q), and the part (θ), and the three-term relationship among the product (G), the assembly process (Q), and the production line (δ) and also determines based on the data classification (PC003) and the part number (Q) that the assembly processes (Q) are the same common production factor, combines the products (G) in these three-term relationships, combines the assembly processes (Q) in these three-term relationships, and connects the assembly drawing (β), the part (θ), and the production line (δ) just below the assembly process (Q) in parallel. As a result, the three-term relationship among the product (G), the assembly process (Q), and the assembly drawing (β), the three-term relationship among the product (G), the assembly process (Q), and the part (θ), and the three-term relationship among the product (G), the assembly process (Q), and the production line (δ) are integrated (three-term relationship integrating means), so that a route (technical information route) in which the assembly process (Q) lies just below the product (G), and the assembly drawing (β), the part (θ), and the production line (δ) lie just below the assembly process(Q) in parallel is built.

Further, the computer 11 determines based on the data classification (PC001) and the part number (G) that the products (G) are the same common production factor in the three-term relationship among the product (G), the treatment process (R), and the part (ε), the three-term relationship among the product (G), the treatment process (R), and the production tool (ζ), and the three-term relationship among the product (G), the treatment process (R), and the processing instruction (I) and also determines based on the data classification (PC003) and the part number (R) that the treatment processes (R) are the same common production factor, combines the products (G) in these three-term relationships, combines the treatment processes (R) in these three-term relationships, and connects the part (ε), the production tool (ζ), and the processing instruction (I) just below the treatment process (R) in parallel. As a result, the three-term relationship among the product (G), the treatment process (R), and the part (ε), the three-term relationship among the product (G), the treatment process (R), and the production tool (ζ), and the three-term relationship among the product (G), the treatment process (R), and the processing instruction (I) are integrated (three-term relationship integrating means), so that a route (technical information route) in which the treatment process (R) lies just below the product (G), and the part (ε), the production tool (ζ), and the processing instruction (I) lie just below the treatment process (R) in parallel is built. When building these routes, the computer 11 builds a series of routes in which the warehouse (D) lies below the shop (C); the product (G), below the warehouse (D); the inspection process (P), the assembly process (Q), and the treatment process (R), below the product (G); the inspection standard (α), below the inspection process (P); the assembly drawing (β), the part (θ), and the production line (δ), below the assembly process (Q); and the part (ε), the production tool (ζ), and the processing instruction (I), below the treatment process (R).

When integrating the three-term relationships and also integrating the two-term relationships to thereby build the route connected in series from the higher level toward the lower level, the computer 11 incorporates each of the production factors extracted from the factor-type database 17 in the route, and creates a production system in which a plurality of production factors of various types are connected in series from a superordinate concept toward a subordinate concept thereof (production system creating means). In the created production system, the shop (C) lies at the top, and the warehouse (D), the product (G), the inspection process (P), the assembly process (Q), the treatment process (R), the inspection standard (α), the assembly drawing (β), the part (θ), the production line (δ), the part (ε), the production tool (ζ), and the processing instruction (I) are located in a line toward the lower level therefrom, as shown in Fig. 8. The computer 11 stores the production system of the created article (1) in the storage unit or the hard disk (production system storing means), and outputs the production system of the created article (1) via the output device (production system outputting means).

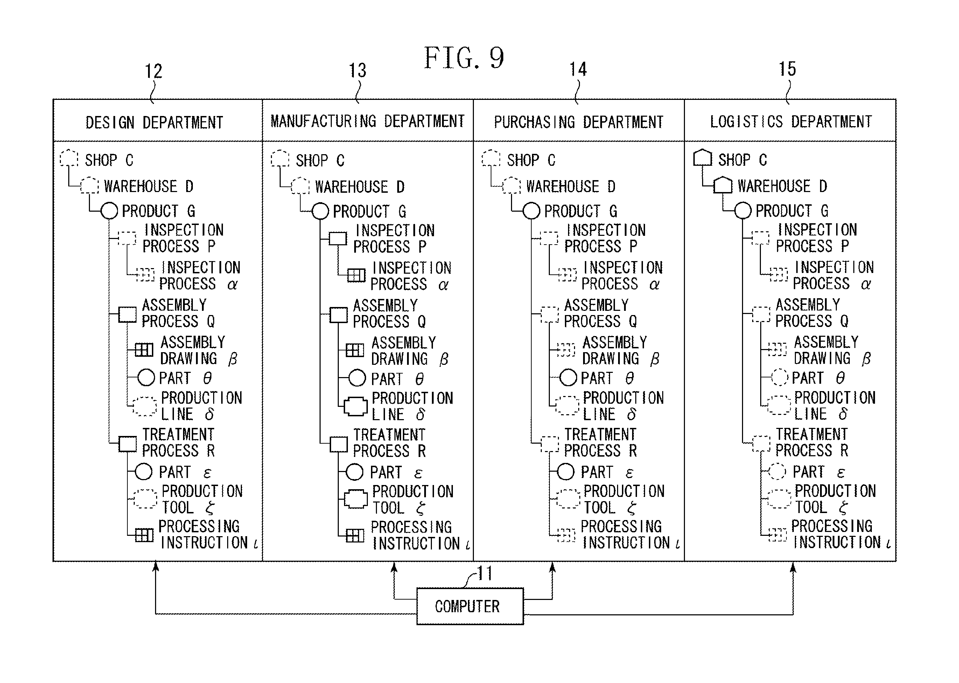

Fig. 9 is a view showing another example of the production system outputted by department. In this system 10, only the production factors represented by the solid lines shown in Fig. 9 are outputted from the output device arranged in each of the departments 12, 13, 14, and 15. The production system of the article (1) formed of the product (G), the assembly process (Q), the treatment process (R), the assembly drawing (β), the part (θ), the part (ε), and the processing instruction (I) to which the departmental number 1 is set is displayed on the display arranged in the design department 12, but the shop (A), the warehouse (B), the inspection process (P), the inspection standard (α), the production line (δ), and the production tool (ζ) to which the other departmental numbers 2, 3, and 4 are set are not displayed thereon. The production system of the article (1) formed of the product (G), the inspection process (P), the assembly process (Q), the treatment process (R), the inspection standard (α), the assembly drawing (β), the part (θ), the production line (δ), the part (ε), the production tool (ζ), and the processing instruction (I) to which the departmental number 2 is set is displayed on the display arranged in the manufacturing department 13, but the shop (A) and the warehouse (B) to which the other departmental numbers 1, 3, and 4 are set are not displayed thereon. In addition, the production system of the article (1) formed of the product (G), the part (θ), and the part (ε) to which the departmental number 3 is set is displayed on the display arranged in the purchasing department 14, but the shop (A), the warehouse (B), the inspection process (P), the assembly process (Q), the treatment process (R), the inspection standard (α), the assembly drawing (β), the production line (δ), the production tool (ζ), and the processing instruction (I) to which the other departmental numbers 1, 2, and 4 are set are not displayed thereon. The production system of the article (1) formed of the shop (A), the warehouse (B), and the product (G) to which the departmental number 4 is set is displayed on the display arranged in the logistics department 15, but the inspection process (P), the assembly process (Q), the treatment process (R), the inspection standard (α), the assembly drawing (β), the part (θ), the production line (δ), the part (ε), the production tool (ζ), and the processing instruction (I) to which the other departmental numbers 1, 2, and 3 are set are not displayed thereon. However, the whole production system may also be displayed on the display in each of the departments 12, 13, 14, and 15 by selecting an overall display.

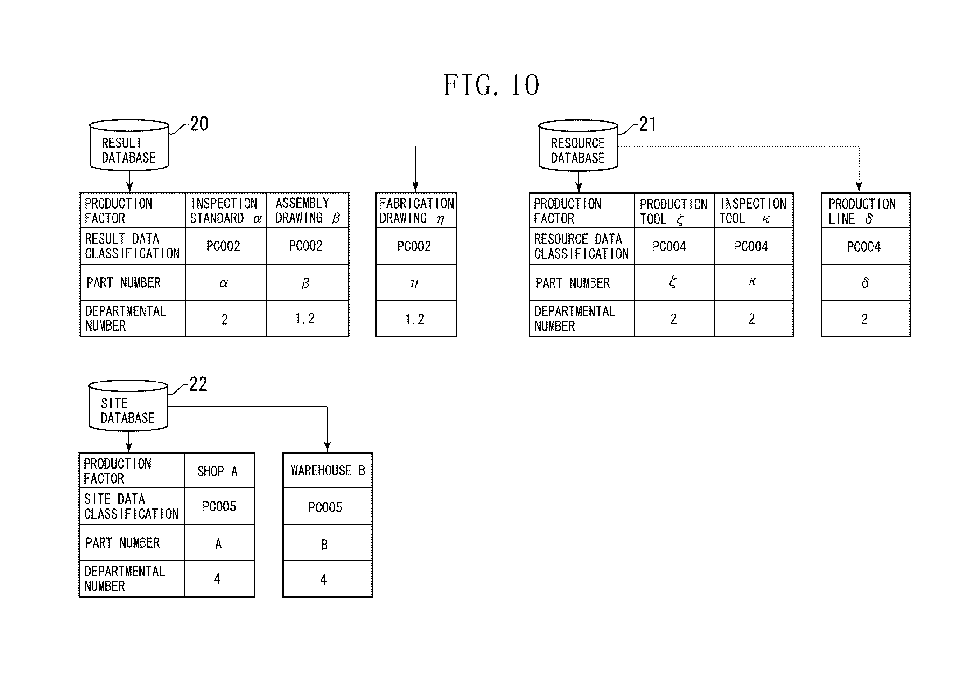

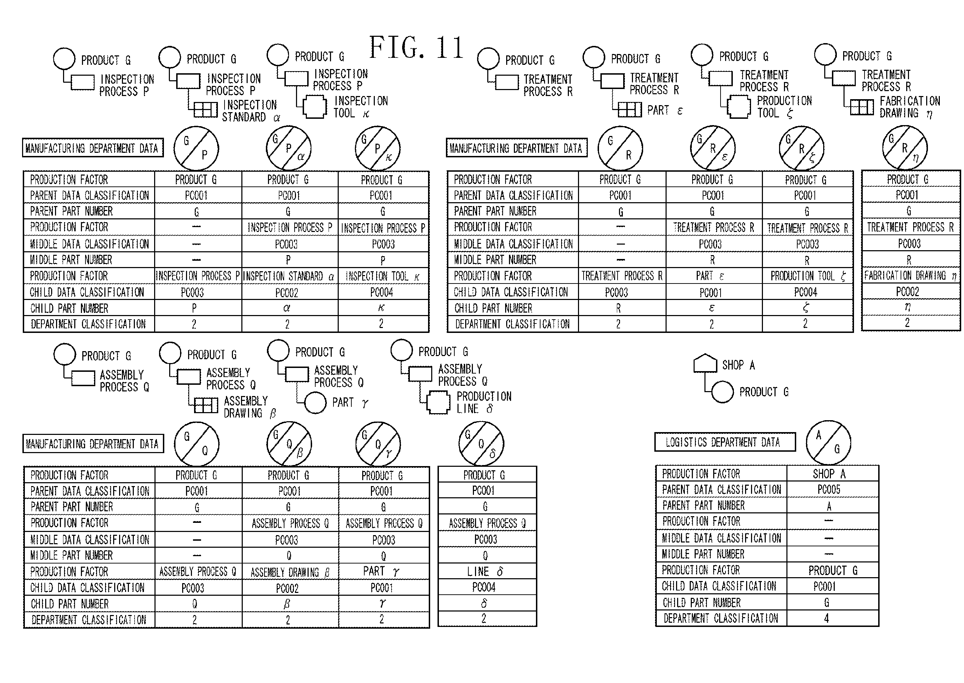

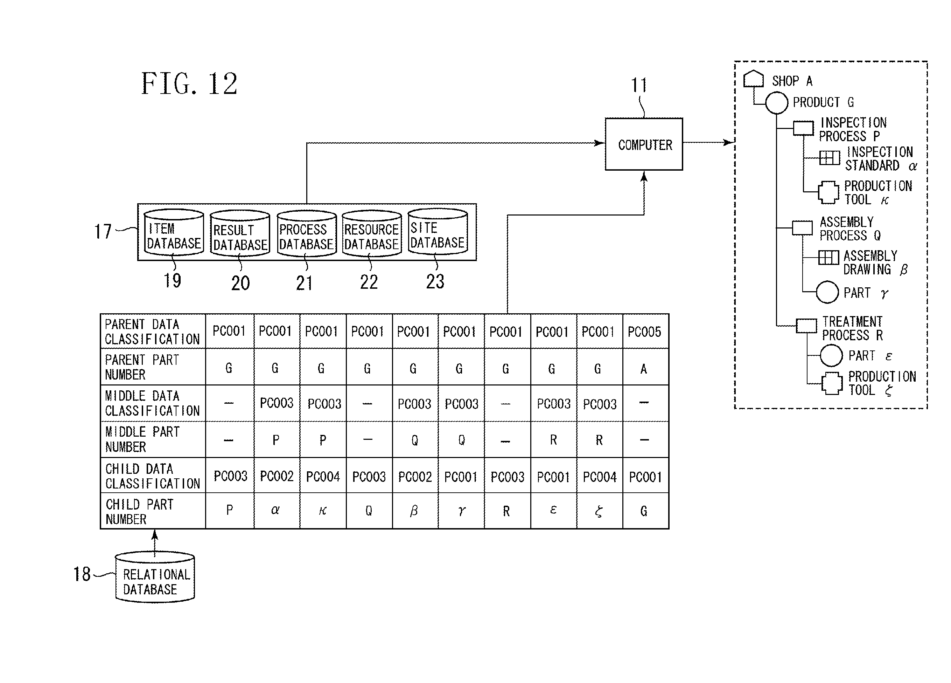

Fig. 10 is a view showing another example of a plurality of production factors of various types stored in the factor-type database 17, while Fig. 11 is a view showing another example of the two-term relationship and the three-term relationship between and among the production factors stored in the relational database 18. Fig. 12 is a view for explaining new integration of the two-term relationships and integration of the three-term relationships executed by the computer 11. In the embodiments shown in Figs. 10 to 12, production factors are added to the main file of the factor-type database 17, and a part of the production factors stored in the main file of the factor-type database 17 is deleted (altered). Further, a part of the first to third production factors is added (altered) to the main file of the relational database 18, and a part of the first to third production factors stored in the main file of the relational database 18 is deleted (altered).

One example of the addition and the deletion of the production factor will be described using a case in which an inspection tool (K) is added, and the warehouse (B), the fabrication drawing (η), and the production line (δ) are deleted from the state shown in Fig. 2 as an example as follows. When a production factor addition is selected from the items displayed on the display, a production factor addition area and the departmental area will be displayed on the display. The inspection tool (κ) and its part number (κ) (identification number) are inputted into a resource addition area via the input device, and the department classification of the inspection tool (κ) is inputted into a departmental area corresponding to the resource addition area. When an addition instruction of the production factor is inputted from the input device after inputting these data, the computer 11 determines that the inspection tool (κ) belongs to the resource with reference to the factor-type, the production factor, and the factor-type number stored in the storage unit or the hard disk, gives the fourth factor-type number (PC004) to the inspection tool (κ), and gives the departmental number (2) to the inspection tool (κ) based on the inputted department classification. Subsequently, the computer 11 stores inspection tool data, such as the factor-type number (PC004) and the departmental number (2) of the inspection tool (κ), the part number (κ) for specifying the inspection tool (κ), and the like in the main file of the resource database 22. The inspection tool data includes contents of the inspection tool (κ) (details of inspection, instruction for use, and the like).

When a production factor deletion is selected from the items displayed on the display, a production factor deletion area (1) to a production factor deletion area (n) will be displayed on the display. The warehouse (B) is inputted into the production factor deletion area (1), the fabrication drawing (η) is inputted into the production factor deletion area (2), and the production line (δ) is inputted into the production factor deletion area (3). When a deletion instruction of the production factor is inputted from the input device after inputting these data into production factor deletion area, the computer 11 deletes the data of the warehouse (B) from the main file of the site database 22, deletes the data of the fabrication drawing (η) from the main file of the result database 20, and deletes the data of the production line (δ) from the main file of the resource database 21. It is to be noted that the data of the warehouse (B) is stored in the subfile of the site database 22, and the data of the fabrication drawing (η) is stored in the subfile of the result database 20. The data of the production line (δ) is stored in the subfile of the resource database 21.

One example of the addition of the first to third production factors to the relational database 18 will be described using a case in which a three-term relationship among the product (G), the inspection process (P), and the inspection tool (κ) is added in connection with the addition of the inspection tool (κ) (third production factor) as an example as follows. When a relation addition is selected from the items displayed on the display, a two-term relationship addition area and a three-term relationship addition area will be displayed on the display. The product (G), the inspection process (P), and the inspection tool (κ) are inputted into a relation addition area (1) in the three-term relationship addition area, and the department classification (2) is also inputted into a departmental area corresponding to the relation addition area (1). Further, the part number (G) for specifying the product (G) as the parent part number (first production factor), the item number (PC001) (first factor-type number) as the parent data classification, the part number (P) for specifying the inspection process (P) as the middle part number (second production factor), the process number (PC003) as the middle data classification (third factor-type number), the part number (κ) for specifying the inspection tool (κ) as the child part number (third production factor), and the resource number (PC004) (fourth factor-type number) as the child data classification are inputted.

When an addition instruction of the relation is inputted from the input device after inputting these data, the computer 11 stores the three-term relationship among the product (G), the inspection process (P), and the inspection tool (κ) in the main file of the relational database 18. The part number (G) for specifying the product (G) as the parent part number (first production factor), the item number (PC001) (first factor-type number) which is the parent data classification of the product (G), the part number (P) for specifying the inspection process (P) as the middle part number (second production factor), the process number (PC003) (third factor-type number) which is the middle data classification of the inspection process (P), the part number (κ) for specifying the inspection tool (κ) as the child part number (third production factor), and the resource number (PC004) (fourth factor-type number) which is the child data classification of the inspection tool (κ) are stored in the relational database 18. In the relational database 18, the product (G), the inspection process (P), and the inspection tool (κ) are connected to each other, and the product (G), the inspection process (P), and the inspection tool (κ) are linked with each other based on the three-term relationship.

One example of the deletion of the first to third production factors stored in the relational database 18 will be described using a case in which the three-term relationship among the shop (A), the warehouse (B), and the product (G) is deleted, the three-term relationship among the product (G), and an assembly process (P), and the production line (δ) is deleted, and the three-term relationship among the product (G), the treatment process (R), and the fabrication drawing (η) is also deleted in connection with deleting the warehouse (B) (first production factor), the production line (δ) (third production factor), and the fabrication drawing (η) (third production factor) as an example as follows. The shop (A), the warehouse (B), and the product (G) are inputted into a relation deletion area (1) displayed on the display, the product (G), the assembly process (P), and the production line (δ) are inputted into a relation deletion area (2), and the product (G), the treatment process (R), and the fabrication drawing (η) are inputted into a relation deletion area (3). When these data are inputted into respective relation deletion areas, the three-term relationship among the shop (A), the warehouse (B), and the product (G) is displayed on the relation deletion area (1), the three-term relationship among the assembly process (h) and the part (D) is displayed on the relation deletion area (2), and the three-term relationship among the product (G), the treatment process (R), and the fabrication drawing (η) is displayed on the relation deletion area (2). When a deletion instruction of the relation is inputted from the input device, The computer 11 deletes the three-term relationship among the shop (A), the warehouse (B), and the product (G), the three-term relationship among the product (G), and the assembly process (P), and the production line (δ), and the three-term relationship among the product (G), the treatment process (R), and the fabrication drawing (η) stored in the main file of the relational database 18. It is to be noted that the three-term relationship among the shop (A), the warehouse (B), and the product (G), the three-term relationship among the product (G), and the assembly process (P), and the production line (δ), and the three-term relationship among the product (G), the treatment process (R), and the fabrication drawing (η) are stored in the subfile of the relational database 18.

The creation of the production system of the article (1) executed by the computer 11 after the production factors and the first to third production factors are added and deleted will be described based on Fig. 12 as follows. When creation of the production system is instructed via the input device, the computer 11 extracts the two-term relationship between the shop (A) and the product (G) from the relational database 18 as the logistics department data. Next, the computer 11 interprets the site number (PC005) of the parent data classification of the shop (A) as the site data classification (PC005) of the site database 23 to extract data of the shop (A) from the site database 23 based on the part number (A) and the site data classification (PC005), and interprets the item number (PC001) of the child data classification of the product (G) as the item data classification (PC001) (first factor-type number) of the item database 19 to extract data of the product (G) from the item database 19 based on the part number (G) and the item data classification (PC001).

The computer 11 extracts the two-term relationship between product (G) and the inspection process (P), the three-term relationship among the product (G), the inspection process (P), and the inspection standard (α), and the three-term relationship among the product (G), the inspection process (P), and the inspection tool (κ) from the relational database 18 as the manufacturing department data. Next, the computer 11 interprets the process number (PC003) of the middle data classification of the inspection process (P) as the process data classification (PC003) (third factor-type number) of the process database 21 to extract data of the inspection process (P) from the process database 21 based on the part number (P) and the process data classification (PC003), and interprets the result number (PC002) of the child data classification of the inspection standard (α) as the result data classification (PC002) (second factor-type number) of the result database 20 to extract data of the inspection standard (α) from the result database 20 based on the part number (α) and the result data classification (PC002). The computer 11 interprets the resource number (PC004) of the child data classification of the inspection tool (κ) as the resource data classification (PC004) (fourth factor-type number) of the resource database 22 to extract data of the inspection tool (κ) from the resource database 22 based on the part number (κ) and the resource data classification (PC004).

The computer 11 extracts the two-term relationship between the product (G) and the assembly process (Q), the three-term relationship among the product (G), the assembly process (Q), and the assembly drawing (β), and the three-term relationship among the product (G), the assembly process (Q), and the part (γ) from the relational database 18 as the manufacturing department data. Next, the computer 11 interprets the process number (PC003) of the middle data classification of the assembly process (Q) as the process data classification (PC003) (third factor-type number) of the process database 21 to extract data of the assembly process (Q) from the process database 21 based on the part number (Q) and the process data classification (PC003), and interprets the result number (PC002) of the child data classification of the assembly drawing (β) as the result data classification (PC002) (second factor-type number) of the result database 20 to extract the data of the assembly drawing (β) from the result database 20 based on the part number (β) and the result data classification (PC002). The computer 11 interprets the item number (PC001) of the child data classification of the part (γ) as the item data classification (PC001) (first factor-type number) of the item database 19 to extract data of the part (γ) from the item database 19 based on the part number (γ) and the item data classification (PC001).

The computer 11 extracts the two-term relationship between the product (G) and the treatment process (R), the three-term relationship among the product (G), the treatment process (R), and the part (ε), and the three-term relationship among the product (G), the treatment process (R), and the production tool (ζ) from the relational database 18 as the manufacturing department data. Next, the computer 11 interprets the process number (PC003) of the middle data classification of the treatment process (R) as the process data classification (PC003) (third factor-type number) of the process database 21 to extract data of the treatment process (R) from the process database 21 based on the part number (R) and the process data classification (PC003), and interprets the item number (PC001) of the child data classification of the part (ε) as the item data classification (PC001) (first factor-type number) of the item database 19 to extract data of the part (ε) from the item database 19 based on the part number (ε) and the item data classification (PC001). The computer 11 interprets the resource number (PC004) of the child data classification of the production tool (ζ) as the resource data classification (PC004) (fourth factor-type number) of the resource database 22 to extract data of the production tool (ζ) from the resource database 22 based on the part number (ζ) and the resource data classification (PC004).

The computer 11 determines based on the data classification (PC001) and the part number (G) that the products (G) are the same common production factor in the two-term relationship between the shop (A) and the product (G) and the three-term relationship among the product (G), the inspection process (P), and the inspection standard (α), and combines the products (G) in the two-term relationship and the three-term relationship. As a result, the two-term relationship between the shop (A) and the product (G) and the three-term relationship among the product (G), the inspection process (P), and the inspection standard (α) are integrated (two-term and three-term relationships integrating means), so that a route (technical information route) in which the product (G) lies just below the shop (A), the inspection process (P) lies just below the product (G), and the inspection standard (α) lies just below the inspection process (P) is built. The computer 11 determines based on the data classification (PC001) and the part number (G) that the products (G) are the same common production factor in the two-term relationship between product (G) and the inspection process (P), the two-term relationship between the product (G) and the assembly process (Q), and the two-term relationship between the product (G) and the treatment process (R), combines the products (G) in these two-term relationships, and connects the inspection process (P), the assembly process (Q), and the treatment process (R) just below the product (G) in parallel. As a result, the two-term relationship between product (G) and the inspection process (P), the two-term relationship between the product (G) and the assembly process (Q), and the two-term relationship between the product (G) and the treatment process (R) are integrated (two-term relationship integrating means), so that a route (technical information route) in which the inspection process (P), the assembly process (Q), and the treatment process (R) lie just below the product (G) in parallel is built.

Next, the computer 11 determines based on the data classification (PC001) and the part number (G) that the products (G) are the same common production factor in the three-term relationship among the product (G), the assembly process (Q), and the assembly drawing (β), and the three-term relationship among the product (G), the assembly process (Q), and the part (γ) and also determines based on the data classification (PC003) and the part number (Q) that the assembly processes (Q) are the same common production factor, combines the products (G) in these three-term relationships, combines the assembly processes (Q) in these three-term relationships, and connects the assembly drawing (β) and the part (γ) just below the assembly process (Q) in parallel. As a result, the three-term relationship among the product (G), the assembly process (Q), and the assembly drawing (β), and the three-term relationship among the product (G), the assembly process (Q), and the part (γ) are integrated (three-term relationship integrating means), so that a route (technical information route) in which the assembly process (Q) lies just below the product (G), and the assembly drawing (β) and the part (γ) lie just below the assembly process(Q) in parallel is built.

Further, the computer 11 determines based on the data classification (PC001) and the part number (G) that the products (G) are the same common production factor in the three-term relationship among the product (G), the treatment process (R), and the part (ε), and the three-term relationship among the product (G), the treatment process (R), and the production tool (ζ) and also determines based on the data classification (PC003) and the part number (R) that the treatment processes (R) are the same common production factor, combines the products (G) in these three-term relationships, combines the treatment processes (R) in these three-term relationships, and connects the part (ε) and the production tool (ζ) just below the treatment process (R) in parallel. As a result, the three-term relationship among the product (G), the treatment process (R), and the part (ε), and the three-term relationship among the product (G), the treatment process (R), and the production tool (ζ) are integrated (three-term relationship integrating means), so that a route (technical information route) in which the treatment process (R) lies just below the product (G), and the part (ε) and the production tool (ζ) lie just below the treatment process (R) in parallel is built. When building these routes, the computer 11 builds a series of routes in which the product (G) lies below the shop (A); the inspection process (P), the assembly process (Q), and the treatment process (R), below the product (G); the inspection standard (α) and the inspection tool (κ), below the inspection process (P); the assembly drawing (β) and the part (γ), below the assembly process(Q); and the part (ε) and the production tool (ζ), below the treatment process (R).

When integrating the two-term relationships and also integrating the three-term relationships to thereby build the route connected in series from the higher level toward the lower level, the computer 11 incorporates each of the production factors extracted from the factor-type database 17 in the route, and creates a production system in which a plurality of production factors of various types are connected in series from a superordinate concept toward a subordinate concept thereof (production system creating means). In the created production system, the shop (A) lies at the top, and the product (G), the inspection process (P), the assembly process (Q), the treatment process (R), the inspection standard (α), the inspection tool (κ), the assembly drawing (β), the part (γ), the part (ε), and the production tool (ζ) are located in a line toward the lower level therefrom, as shown in Fig. 12. The computer 11 stores the production system of the created article (1) in the storage unit or the hard disk (production system storing means), and outputs the production system of the created article (1) via the output device (production system outputting means).

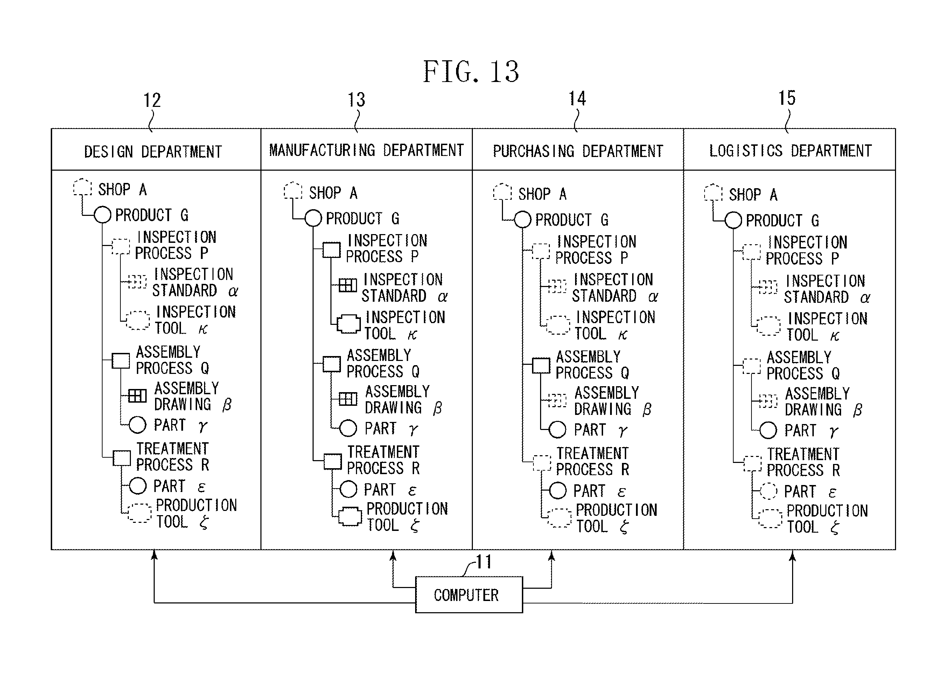

Fig. 13 is a view showing another example of the production system outputted by department. In this system 10, only the production factors represented by the solid lines shown in Fig. 13 are outputted from the output device arranged in each of the departments 12, 13, 14, and 15. The production system of the article (1) formed of the product (G), the assembly process (Q), the treatment process (R), the assembly drawing (β), the part (γ), and the parts (ε) to which the departmental number 1 is set is displayed on the display arranged in the design department 12, but the shop (A), the inspection process (P), the inspection standard (α), the inspection tool (κ), and the production tool (ζ) to which the other departmental numbers 2, 3, and 4 are set are not displayed thereon. The production system of the article (1) formed of the product (G), the inspection process (P), the assembly process (Q), the treatment process (R), the inspection standard (α), the inspection tool (κ), the assembly drawing (β), the part (γ), the part (ε), and the production tool (ζ) to which the departmental number 2 is set is displayed on the display arranged in the manufacturing department 13, but the shop (A) to which the other departmental numbers 1, 3, and 4 are set is not displayed thereon. In addition, the production system of the article (1) formed of the product (G), the part (γ), and the part (ε) to which the departmental number 3 is set is displayed on the display arranged in the purchasing department 14, but the shop (A), the inspection process (P), the assembly process (Q), the treatment process (R), the inspection standard (α), the assembly drawing (β), the inspection tool (κ), and the production tool (ζ) to which the other departmental numbers 1, 2, and 4 are set are not displayed thereon. The production system of the article (1) formed of the shop (A) and the product (G) to which the departmental number 4 is set is displayed on the display arranged in the logistics department 15, but the inspection process (P), the assembly process (Q), the treatment process (R), the inspection standard (α), the inspection tool (κ), the assembly drawing (β), the part (γ), the part (ε), and the production tool (ζ) to which the other departmental numbers 1, 2, and 3 are set are not displayed thereon. However, the whole production system may also be displayed on the display in each of the departments 12, 13, 14, and 15 by selecting an overall display.

In the production system creating system 10 and the production system creating method, while integrating a plurality of two-term relationships of various types extracted from the relational database 18 and integrating a plurality of three-term relationships of various types extracted from the relational database 18, the two-term relationship and the three-term relationship are integrated, and according to the integrated two-term relationship, the integrated three-term relationship, and the integrated two-term/three-term relationship, the production systems corresponding to various articles are generated by connecting in series a plurality of production factors of various types extracted from the factor-type database 17 from a superordinate concept toward a subordinate concept thereof, so that utilizing the two-term relationship formed of the first and second production factors and the three-term relationship formed of the first to third production factors makes it possible to create various production systems in which the production factors of different types are freely combined. It is to be noted that if the production system is built only by the two-term relationship, a plurality of second production factors whose factor-type is different from that of the first production factor are linked just below the first production factor, so that a plurality of different production systems may be built to the same article, thus not allowing the production system for every specific condition to be represented. In the production system creating system and the production system creating method, however, the specific second production factor is linked just below the first production factor and the specific third production factor is also linked just below the second production factor by adding the three-term relationship to the two-term relationship, thus allowing only the production systems of the specific condition corresponding to various articles to be built using these production factors.

In the production system creating system 10 and the production system creating method, factor-type numbers of the first and second production factors of the two-term relationship and factor-type numbers of the first to third production factors of the three-term relationship extracted from the relational database 18 are referred to, and while integrating a plurality of two-term relationships of various types thus extracted by combining the production factors of the same factor-type number among these two-term relationships, and integrating a plurality of three-term relationships of various types thus extracted by combining the production factors of the same factor-type number among these three-term relationships, the two-term relationship and the three-term relationship are integrated by combining the production factors of the same factor-type number among the two-term relationship and the three-term relationship, so that it is possible to reliably combine the mutually associated production factors with each other, thus allowing the production system in which the production factors being the technical information of the article are connected in series to be reliably formed. In the production system creating system 10 and the production system creating method, each of the production factors is classified into the first to fifth factor-type databases 19, 20, 21, 22, and 23 based on the first to fifth factor-type numbers set to them, and is stored in the factor-type databases 19, 20, 21, 22, and 23, so that it is possible to group each of the production factors that can be shared by each of the departments 12, 13, 14, and 15 for every factor-type according to the first to fifth factor-type databases 19, 20, 21, 22, and 23 to thereby manage them in an integrated manner. Moreover, a plurality of two-term relationships of various types and a plurality of three-term relationships of various types are managed in an integrated manner using the relational database 18, so that while each of the departments 12, 13, 14, and 15 sharing the first to fifth factor-type databases 19, 20, 21, 22, and 23 and the relational database 18, it is possible to form the production system that can shared by each of the departments 12, 13, 14, and 15 based on each of the production factors stored in the first to fifth factor-type databases 19, 20, 21, 22, and 23, and the two-term relationships and the three-term relationships stored in the relational database 18, to manage the production system in an integrated manner, and also to provide each of the departments 12, 13, 14, and 15 with the created production system in real time. For that reason, it is not necessary for each of the departments 12, 13, 14, and 15 to individually manage each production factor, and for each of the departments 12, 13, 14, and 15 to uniquely form the production system, thus allowing useless time and labor due to each of the departments 12, 13, 14, and 15 creating and managing a huge number of production systems which are different from each other to be omitted.

In the production system creating system 10 and the production system creating method, since the departmental production system formed only of the required production factors is outputted for every department based on the first to fourth departmental numbers (first to n-th departmental numbers) individually set to the production factor, the production factor which is not required to be displayed to each of the departments 12, 13, 14, and 15 may be omitted from the production system, thus allowing the production system having high utility value and ease-of-use for every department to be provided to the department in real time. In the production system creating system 10 and the production system creating method, each of the departments 12, 13, 14, and 15 may utilize the production system formed only of production factors required for it, thus allowing the working efficiency of each of the departments 12, 13, 14, and 15 to be improved.

In the production system creating system and the production system creating method, it is possible to create a new production system that can be shared by each of the departments 12, 13, 14, and 15 in real time after the alteration of the production factors and the first to third production factors. In the production system creating system and the production system creating method, it is possible to manage the alteration of the production factors in an integrated manner using the factor-type database 17, and also to manage the alteration of the first to third production factors in an integrated manner using the relational database 18. For that reason, it is not necessary for each of the departments 12, 13, 14, and 15 to alter the production factors and the first to third production factors to thereby create and manage the production system, thus allowing time and labor due to each of the departments 12, 13, 14, and 15 individually performing the alteration of the production factors and the alteration of the first to third production factors to be omitted.

## Claims

1. A production system creating system for creating a production system of an article from a combination of production factors branching from a superordinate concept toward a subordinate concept, wherein
the production factors are linked with each other by an upper/lower two-term relationship between an arbitrary first production factor and a second production factor lying just below it and also linked with each other by an upper/lower three-term relationship among the first and second production factors, and a third production factor lying just below the second production factor, and the system comprises a factor-type database for storing a plurality of production factors of different types, and a relational database for storing a plurality of two-term relationships of different types and a plurality of three-term relationship of different types, and uses these production factors to execute production system creating means for creating production systems corresponding to various articles,
wherein in the production system creating means, a plurality of three-term relationships of various types required for creation of the production system are extracted from the relational database and also a plurality of production factors of various types corresponding to first to third production factors for forming the extracted three-term relationship are extracted from the factor-type database, the three-term relationships extracted from the relational database are integrated, and the production factors extracted from the factor-type database are connected in series from a superordinate concept toward a subordinate concept thereof according to the three-term relationship thus integrated to thereby create production systems corresponding to the various articles.

2. The production system creating system according to claim 1, wherein in the production system creating system, the factor-type database is classified into first to n-th factor-type databases, first to n-th factor-type numbers for specifying a type of the production factor are individually set to these production factors, these production factors are stored in the first to n-th factor-type databases based on the first to n-th factor-type numbers, and the factor-type numbers of the first and second production factors for forming the two-term relationship and the factor-type number of the first to third production factors for forming the three-term relationship are stored in the relational database,
wherein in the production system creating means, a plurality of production factors of various types corresponding to the first to third production factors for forming these extracted three-term relationships are extracted from the first to n-th factor-type databases based on the first to n-th factor-type numbers, and while referring to the first to n-th factor-type numbers of the first to third production factors of the three-term relationship extracted from the relational database, a plurality of three-term relationships of various types thus extracted are integrated by combining the production factors of the same factor-type number with each other among the production factors for forming these three-term relationships.

3. The production system creating system according to claim 1 or 2, wherein in the production system creating system, first to n-th departmental numbers for sorting the production factors by department are individually set to these production factors, departmental production system outputting means for outputting a departmental production system formed only of required production factors among the production systems created by the production system creating means is executed for every department; and in the departmental production system outputting means, the departmental numbers of a plurality of production factors of various types corresponding to the first to third production factors for forming these three-term relationship extracted from the relational database are referred to, and the production system formed only of production factors corresponding to the same departmental number is outputted.

4. The production system creating system according to any one of claims 1 to 3,
wherein in the production system creating system, each of the production factors stored in the factor-type database can be altered and at least any one of the first to third production factors stored in the relational database can be altered; and in the production system creating means, when each of the production factors stored in the factor-type database and the first to third production factors stored in the relational database are altered, altered new production factors are used and new three-term relationships formed of the altered first to third production factors are used to thereby integrate the three-term relationships again, and production systems corresponding to the various articles are re-created according to the integrated three-term relationship.

5. A production system creating method that creates a production system of an article from a combination of various production factors branching from a superordinate concept toward a subordinate concept,
wherein the production system creating method comprises a factor-type database for storing a plurality of production factors of various types, and a relational database for storing a plurality of the two-term relationships of various types between the production factors linked by an upper/lower two-term relationship between an arbitrary first production factor and a second production factor lying just below it and also for storing a plurality of the three-term relationships of various types among the production factors linked by an the upper/lower three-term relationship among the first and second production factors, and a third production factor lying just below the second production factor,
wherein in the production system creating method, a plurality of three-term relationships of various types required for creation of the production system are extracted from the relational database and also a plurality of production factors of various types corresponding to first to third production factors for forming the extracted three-term relationship are extracted from the factor-type database, the three-term relationships extracted from the relational database are integrated, these production factors extracted from the factor-type database are connected in series from a superordinate concept toward a subordinate concept thereof according to the integrated three-term relationship to thereby create production systems of the various articles, and created production systems are stored and outputted.

6. The production system creating method according to claim 5, wherein the factor-type database is classified into first to n-th factor-type databases, first to n-th factor-type numbers for specifying a type of the production factor are individually set to these production factors, these production factors are stored in the first to n-th factor-type databases based on the first to n-th factor-type numbers, and the factor-type numbers of the first and second production factors for forming the two-term relationship and the factor-type number of the first to third production factors for forming the three-term relationship are stored in the relational database,
wherein in the production system creating method, a plurality of production factors of various types corresponding to the first to third production factors for forming these extracted three-term relationships are extracted from the first to n-th factor-type databases based on the first to n-th factor-type numbers, and while referring to the first to n-th factor-type numbers of the first to third production factors of the three-term relationship extracted from the relational database, a plurality of three-term relationships of various types thus extracted are integrated by combining the production factors of the same factor-type number with each other among the production factors for forming these three-term relationships.

7. The production system creating method according to claim 5 or 6, wherein in the production system creating method, first to n-th departmental numbers for sorting the production factors by department are individually set to these production factors, the first to n-th departmental numbers of a plurality of production factors of various types corresponding to the first to third production factors for forming these three-term relationship extracted from the relational database are referred to, and a departmental production system formed only of the production factors corresponding to the same departmental number among the created production systems is outputted.

8. The production system creating method according to any one of claims 5 to 7,
wherein in the production system creating method, each of the production factors stored in the factor-type database can be altered and at least any one of the first to third production factors stored in the relational database can be altered; and when each of the production factors stored in the factor-type database and the first to third production factors stored in the relational database are altered, altered new production factors are used and new three-term relationships formed of the altered first to third production factors are used to thereby integrate the three-term relationships again, and production systems corresponding to the various articles are re-created according to the integrated three-term relationship.

9. A computer readable storage medium that stores a production system creating program for causing a computer to execute a production system creating method that creates a production system of an article from a combination of production factors branching from a superordinate concept toward a subordinate concept,
wherein the production system creating method extracts a plurality of three-term relationships of various types required for creating the production system from a relational database for storing a plurality of the two-term relationships of various types between the production factors linked by an upper/lower two-term relationship between an arbitrary first production factor and a second production factor lying just below it and a plurality of the three-term relationships of various types among the production factors linked by an the upper/lower three-term relationship among the first and second production factors, and a third production factor lying just below the second production factor, extracts a plurality of production factors of various types corresponding to the first to third production factors for forming the extracted three-term relationships from the factor-type database for storing these production factors, integrates these three-term relationships extracted from the relational database, connects these production factors extracted from the factor-type database in series from a superordinate concept toward a subordinate concept thereof according to the integrated three-term relationship to thereby create production systems corresponding to the various articles, and stores and outputs the created production systems.

10. The computer readable storage medium according to claim 9, wherein the computer readable storage medium stores the production system creating program for causing the computer to execute the production system creating method that extracts a plurality of production factors of various types corresponding to the first to third production factors for forming these extracted three-term relationships from the first to n-th factor-type databases based on first to n-th factor-type numbers individually set to these production factors, and while referring to the factor-type numbers of the first to third production factors of the three-term relationship extracted from the relational database, combines production factors of the same factor-type number with each other among the production factors for forming these three-term relationships to thereby integrate a plurality of three-term relationships of various types thus extracted.

11. The computer readable storage medium according to claim 9 or 10, wherein the computer readable storage medium stores the production system creating program for causing the computer to execute the production system creating method that refers to the first to n-th departmental numbers individually set to a plurality of production factors of various types corresponding to the first to third production factors for forming these three-term relationship extracted from the relational database, and outputs a departmental production system formed only of production factors corresponding to the same departmental number among the created production systems.

12. The computer readable storage medium according to any one of claims 9 to 11, wherein the computer readable storage medium stores the production system creating program for causing the computer to execute the production system creating method, in which when each of the production factors stored in the factor-type database and the first to third production factors stored in the relational database are altered, altered new production factors are used and new three-term relationships formed of the altered first to third production factors are used to thereby integrate the three-term relationships again, and production systems corresponding to the various articles are re-created according to the integrated three-term relationship.
